# EUROPEAN PATENT SPECIFICATION

(11) **EP 3 809 673 B1**
(45) Date of publication and mention of the grant of the patent: **21.02.2024**
(21) Application number: 20202374.3
(22) Date of filing: 16.10.2020
(51) Int. Cl.: H04L 67/00, G06F 8/656, H04L 41/082, H04L 41/0823, H04L 41/16, G06N 3/045, G06N 3/063, G06N 3/084, H04L 41/0859, H04L 67/1097, H04L 67/02, G06N 3/044, G06N 3/047, G06N 5/01, G06N 7/01, G06N 20/10, G06N 20/20, H04L 41/08, H04L 41/5022, H04L 67/568

(54) **LIVE UPDATING OF MACHINE LEARNING MODELS**
LIVE-AKTUALISIERUNG VON MASCHINENLERNMODELLEN
MISE À JOUR EN DIRECT DE MODÈLES D'APPRENTISSAGE AUTOMATIQUE

(30) Priority: 20.10.2019 US 201962923591 P; 09.09.2020 US 202017015318
(43) Date of publication of application: 21.04.2021
(60) Divisional application: 24151301.9
(73) Proprietor: NVIDIA Corporation, Santa Clara, CA 95051 (US)
(72) Inventor: ROGERS, Philip J., Santa Clara, CA 95051 (US); PISUPATI, Bhanu, Santa Clara, CA 95051 (US); KHINVASARA, Tushar, Santa Clara, CA 95051 (US); CHOPRA, Rajat, Santa Clara, CA 95051 (US); PURANDARE, Kaustubh, Santa Clara, CA 95051 (US)
(74) Representative: Kraus & Lederer PartGmbB

(56) References cited:
- WO-A1-2020/209951
- US-A1- 2019 303 752
- SANGOLLI DEEPA RAJENDRA ET AL: "Enabling High Availability Edge Computing Platform", 2019 7TH IEEE INTERNATIONAL CONFERENCE ON MOBILE CLOUD COMPUTING, SERVICES, AND ENGINEERING (MOBILECLOUD), IEEE, 4 April 2019 (2019-04-04), pages 85-92, XP033548445, DOI: 10.1109/MOBILECLOUD.2019.00019 [retrieved on 2019-05-09]
- KEDI LI ET AL: "CMS: A Continuous Machine-Learning and Serving Platform for Industrial Big Data", FUTURE INTERNET, vol. 12, no. 6, 10 June 2020 (2020-06-10), page 102, XP055769383, DOI: 10.3390/fi12060102

## Description

### BACKGROUND

Technologies such as machine learning are being utilized for an increasing variety of tasks across a wide variety of industries. For applications utilizing deep learning models, for example, these models are typically deployed with the applications, such as in an application container images. In order to provide the highest level of accuracy for machine learning-based inferences, it may be desirable to frequently update these models. In order to deploy these new or updated models using conventional techniques, however, new containers need to be deployed that require the earlier versions of the applications to be stopped from executing before the new versions can execute in their place, which can result in significant downtime or unavailability of those applications. Non-patent literature - Sangolli DR, Ravindrarao NM, Patil PC, Palissery T, Liu K." Enabling High Availability Edge Computing Platform". 7th IEEE International Conference on Mobile Cloud Computing, Services, and Engineering (MobileCloud) 2019 Apr 4 (pp. 85-92). IEEE. - discloses a distributed edge computing platform having an easy management solution for remote distributed edge nodes to automate multi-tenant services provisioning in an edge computing environment. The major functions of the platform include service auto discover, lightweight container provisioning, GPU container support for deep learning applications, manage all active end nodes without a fixed IP address, secure remote deployment of edge analytic applications, and joint edge/cloud data communication and processing. US patent application 2019/303752 A1 discloses an example access point including a wireless transceiver, processing circuitry, and a non-transitory computer-readable medium comprising instructions. The instructions, when executed on the processing circuitry cause the processing circuitry to replace a trained machine learning model with an updated trained machine learning model.

### BRIEF DESCRIPTION OF THE DRAWINGS

Various embodiments in accordance with the present disclosure will be described with reference to the drawings, in which:
FIG. 1 illustrates an example architecture for supporting an edge application, according to at least one embodiment;
FIG. 2 illustrates a model management system, according to at least one embodiment;
FIG. 3 illustrates an example process for updating a machine learning model for an application, according to at least one embodiment;
FIG. 4 illustrates an example process for launching an edge application with a machine learning model, according to at least one embodiment;
FIG. 5 illustrates an example process for updating a machine learning model for an edge application, according to at least one embodiment;
FIG. 6 illustrates an example process for changing a version of a model utilized by an edge application, according to at least one embodiment;
FIG. 7A illustrates inference and/or training logic, according to at least one embodiment;
FIG. 7B illustrates inference and/or training logic, according to at least one embodiment;
FIG. 8 illustrates an example data center system, according to at least one embodiment;
FIG. 9 illustrates a computer system, according to at least one embodiment;
FIG. 10 illustrates a computer system, according to at least one embodiment;
FIG. 11 illustrates at least portions of a graphics processor, according to one or more embodiments;
FIG. 12 illustrates at least portions of a graphics processor, according to one or more embodiments;
FIG. 13 is an example data flow diagram for an advanced computing pipeline, in accordance with at least one embodiment;
FIG. 14 is a system diagram for an example system for training, adapting, instantiating and deploying machine learning models in an advanced computing pipeline, in accordance with at least one embodiment; and
FIGS. 15A and 15B illustrate a data flow diagram for a process to train a machine learning model, as well as a client-server architecture to enhance annotation tools with pre-trained annotation models, in accordance with at least one embodiment.

### DETAILED DESCRIPTION

Technologies such as machine learning are increasingly being relied upon for a variety of different tasks. For many applications, it may be desirable to have the machine learning hosted on a remote server or other such system, rather than a client device, due in part to the resources needed to execute the machine learning. While various systems can host machine learning and other such applications or functionality from within a provider network or environment, for example, it may be desirable for various situations to host the machine learning at a network edge. Running inferencing applications at edge locations can have various advantages for customers -- such as reduced latency -- as the edge locations can be closer to the connected media sources and sensors, which can be important for latency-critical applications or services that may be accessed from a variety of different geographic locations.

For certain use cases, this machine learning or artificial intelligence (AI)-based functionality may need to operate continuously, such as for the processing of data to generate inference outputs from video streams. For applications with high demand, this may include the application being able to execute around the clock and without any gaps or downtime. Examples of such deployments can be found in applications that perform image or sensor data processing; object detection, identification, and/or classification; area monitoring or surveillance; and world-space perception, among others. These applications are in turn used in a wide spectrum of industries including, without limitation, retail stores, warehouses, airports, parking garages, and highway monitoring. Tasks such as inferencing, as well as downstream analytics that are calculated from the output of this inferencing, may be optimally executed using specific types of hardware, such as may include servers equipped with one or more graphics processing units (GPUs), where the application may be containerized. Often, the servers and application deployments are managed by a container orchestration platform, such as the open source Kubernetes platform. In at least some embodiments, an application container can include, or consist of, an entire runtime environment for an application, including various libraries, binaries, dependencies, and configuration files for the application.

In various systems, inferencing for video or media streams can be performed by running frames of video through a machine learning model, or neural network model, which achieves a certain accuracy and throughput performance. However, more accurate and faster models are being constantly and continuously developed to improve the performance of these inferencing applications. In conventional approaches, models are typically included (*i.e.,* prepackaged) in the container image of an underlying application that uses the inference output. However, this means that to update to a newer, better model, a new container image, which then becomes a new version of the application, must be built and distributed to the computing nodes at the edge locations. The deployment of a new version of the application means that the container currently running at the node must be stopped and a new container started, which results in downtime of inferencing and analytics. This downtime can be on the order of sixty seconds or longer in some example situations, depending on factors such as the complexity and structure of the application and the capabilities of the compute node. As such, the operators of these inference nodes are faced with the prospect of suffering potentially frequent stoppages, as well as inferencing or analytics gaps or using obsolete or less optimized neural network models.

Accordingly, approaches in accordance with various embodiments provide an ability to update a model with zero downtime, or near-zero downtime with no data loss, and without the need to update or restart the application. Various objects, elements, algorithms, processes, or code may be updated using such ability as well within the scope of the various embodiments. In at least one embodiment, models are not built into containers. These models instead can be mounted into containers from storage on a system where the container is running. In various embodiments, a service component can be utilized that can pull updated model versions to the local storage on the system or edge node. In at least one embodiment, an edge manager mechanism can then be used to signal a running inference container application to switch to a different model version. Such an approach can enable a model to be updated using a live update process, for a model in a running application container, without having to tear down the container or miss any incoming data to be processed. These models can also take various forms, and in at least some embodiments may have encryption or security mechanisms applied that can be managed by approaches presented herein.

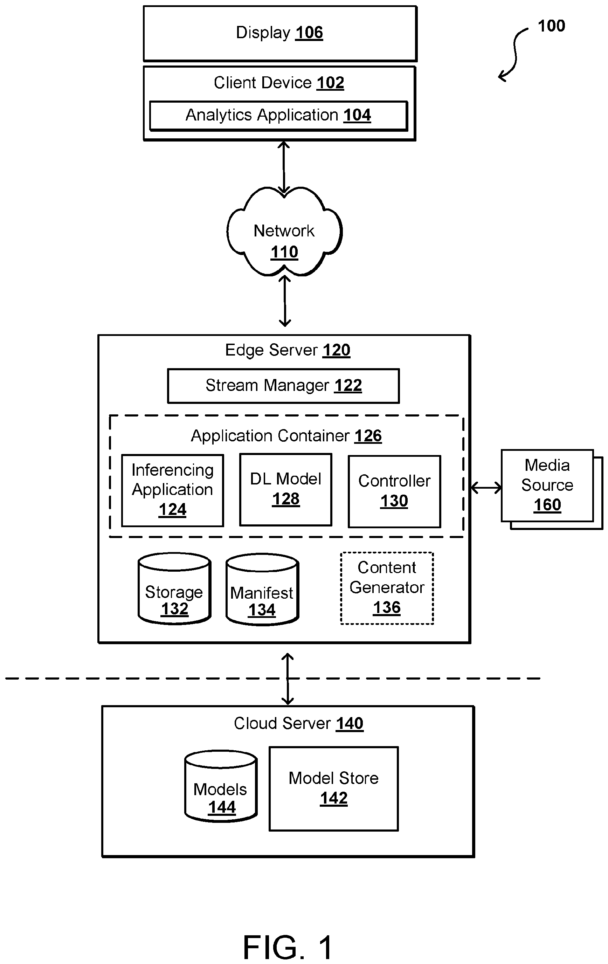

FIG. 1 illustrates an example architecture that can be utilized to provide such functionality, according to at least one embodiment. In an implementation where inferencing is utilized at the edge for one or more video streams, these streams can include video and other media content that can be presented from a media source 160, where the media source 160 may include, but is not limited to, any of a digital camera, video camera, medical scanner, computing device, or other such source of content. Media provided from this media source 160 may be presented using a client device 102, such as may include a desktop computer, notebook computer, set-top box, streaming device, gaming console, smart phone, tablet computer, virtual reality (VR) headset, augmented reality (AR) goggles, a wearable computer, or a smart television. In at least one embodiment, this content transmitted by this media source 160 may include frames of video. In at least one embodiment, the content transmitted by this media source may include medical scan data, such as DICOM images. In at least one embodiment, this media source is connected across a network to an edge server 120. In at least one embodiment, an inferencing application 124 executing on edge server 120 can initiate a session associated with client device 102, such as by using a session manager and user data from a user account, and can cause content to be transmitted to client device 102 using one or more video streams for that session, such as may be managed using an appropriate stream manager 122. In at least one embodiment, client device 102 receiving this content can provide this content for presentation via one or more components of, or in communication with, client device 102, as may include a display 106 for displaying image or video content (as may including animation and game content). In at least one embodiment, a transmission mechanism other than streaming can also be used to transfer at least some of this content from edge server 120, or another such source. An analytics application 104 executing on client device 102 can perform various analytics for content received by the client device 104 as discussed herein.

In at least one embodiment, content to be streamed can be stored in storage 132 on the edge server, as may be generated from live video streams using one or more video cameras or one or more other imaging devices, and using one or more imaging modalities. In one or more other embodiments, the content will be received from one or more media sources 160. In other embodiments, the content may instead be generated at the cloud server 140, the edge server 120, or another appropriate location, such as by using a content generator application 136 to generate gaming, animation, or other such content. This content may also be received over one or more networks 110 in at least some embodiments. In at least one embodiment, this content can be received by an inferencing application 124 that can perform inferencing on that content before transmitting that content (e.g., video stream) to client device 102. Inferencing on live video streams can be used for various purposes, such as for security, medical imaging, traffic monitoring, or inventory management, among other such options. Inferencing at the edge can be performed on various other types of data and inputs as well within the scope of various embodiments. As mentioned, there can be one or more deep learning (DL) models 128, or neural network models, available to the inferencing application 128, which can be stored at the edge server 120, at least initially in storage 132 external to an application container 126, where those models can be mounted to the application container 126 using a controller 130 of the inferencing application. In at least some embodiments, the model to be used can be determined by consulting a manifest 134 that specifies current conditions or information for the inferencing application, where that manifest 134 can be updated by a user or other such source.

In at least one embodiment, additional or new models can be received to each appropriate edge server 120 from a central source, such as a cloud server 140 of a provider that is behind a firewall or otherwise at least partially isolated from edge server 120 and client device 102. This cloud server 140, or other such system or service, can store different versions of one or more models in a model repository 144, for example, and a model store can enable edge server 120 to obtain specific models, such as by pushing those models to the edge server 120 or enabling the edge server to request specific models, as may be identified in the current manifest 134. The edge server can then consult the manifest 134 to ensure that the proper model, and version of that model, is being used for inferencing on content to be transmitted to client device 102.

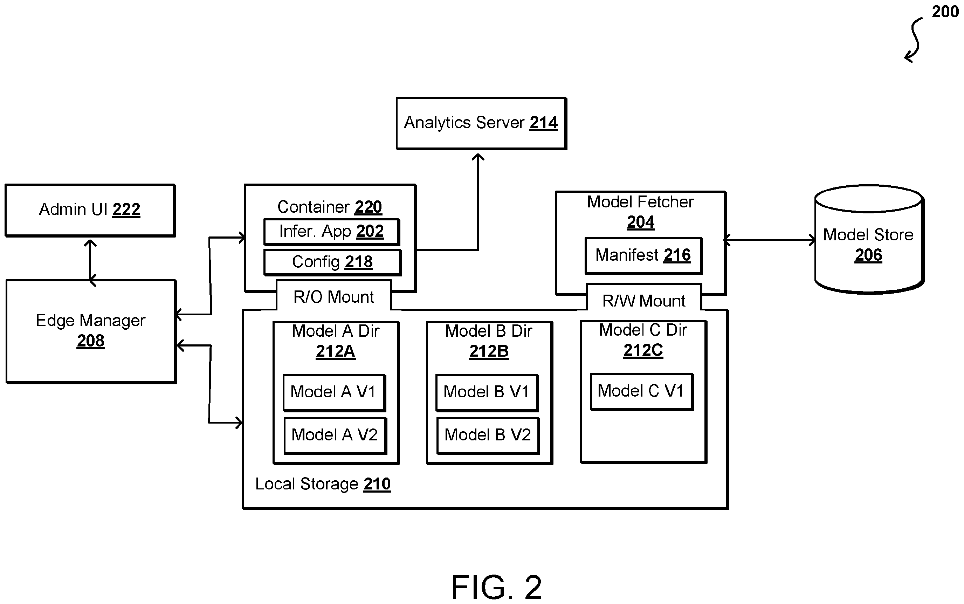

FIG. 2 illustrates components 200 that can be utilized in architecture such as that of FIG. 1 to update and manage models in accordance with various embodiments. As mentioned, in such an embodiment deep learning models can be separated out from an application and can instead be mounted into an application container 220 at runtime from the host system storage. The host system stores models in local storage 210, with a directory 212A through 212C for each model that can each include one or more subdirectories for different versions of that model. These model directories can be mounted, individually or as part of an overall model directory, into the application container 220 at runtime so the directories are visible to the inferencing application 202, and the inferencing application 202 can begin execution with an initial version of each model, as may be specified by a manifest file 216. In at least one embodiment, a model fetcher software component may fetch new versions of any of these models from a model store 206 or other such location, as may be available over at least one network, as those versions become available. The model fetcher, which can mount the model directories via a read/write mount, can then cause these versions to be stored into new sub-directories of the relevant model directory 212. An application management system, such as an edge manager 208, can then send a signal to the inferencing application 202 to switch to a new version of the model. An administrator user interface 222 in communication with the edge manager 208 can enable an administrator or other authorized entity to specify or update information regarding versions and other such information. The application 202 may create a new context loaded with the new model version. In at least some embodiments, context may include a software inference engine. When this new context is ready to operate, the inferencing application 202 may switch the inference operations from the old context to the new context, and the old context can then be deleted. Thereafter, inferencing can be performed using the new model version without interruption, and the downtime during this model update is reduced to zero, or near zero.

In an example implementation in accordance with various embodiments, deployed edge computing applications may include a deep learning inference platform to load their models, such as the TensorRT (TRT) or Triton Inference Server (Triton) platforms from NVIDIA Corporation. In such embodiments, models may be stored in local or locally-mounted storage, with a directory hierarchy for different versions. Model conversion to match a particular GPU and format (*e.g.,* a T4 engine file) can be performed offline, such that the exact format needed by a GPU can be written to a directory that is already mounted to a running container. Edge computing applications can monitor a mounted configuration map and react to a change, using a method like inotify (inode notify in Linux). Edge computing applications can then be modified to switch to a new model version without an application restart. TensorRT (TRT) is an optimized runtime for AI inference on GPUs. In one or more embodiments, an edge computing application can use TRT to load neural network models. Triton provides a cloud inferencing solution optimized for NVIDIA GPUs, which can also be embedded in applications. In one or more embodiments, an edge computing application can use Triton to load neural network models. EGX Stack/EGX Node Stack is a software stack that can run on a GPU enabled server (e.g., an EGX System from NVIDIA Corporation) running edge use cases such as AI inference. EGX Management Service (EMS) can be used as a service for managing EGX Systems as AI Appliances on behalf of a customer or operator. An Edge Manager (EM) can be used as an application management system that operates as the interface to EMS and takes multiple forms: API, Web UI, and CLI.

Such approaches can provide various advantages for different use cases in accordance with various embodiments. For example, such an approach can provide for application and model separation, as application developers are able to provide applications without models, or with default models, and can attach the applications to models, or updated models, on the target system. This allows application and model development and release to be decoupled, and reduces the size of the application container image and its frequency of release or update. Developers, data scientists, or other such sources can then release a new version of a model and make that new version available to an edge application without requiring an application change or release. In some instances, an edge application administrator can make newly-released versions of models available from a location such as cloud storage for ease of deployment to multiple edge locations. An edge application administrator can also generate or provide newly-released versions of models to be fetched automatically to the edge locations where the applications that use those models are run. An edge application administrator is able to choose when to perform a model update at each edge location, as well as to update models with a new version in a running application with no downtime. An edge application administrator is also able to rollback an edge application to a previous or other version of a model, with zero or near-zero downtime.

For applications that wish to participate in live model updates, models may be removed from the container image and a volume mount to a specific directory (*e*.*g*., /models) may be documented at container launch. An alternate approach is to ship with a default version of each model in a separate (*e*.*g*., default) directory, which can be used if the model directory is not created as a mounted volume at launch. Models separated from the application may be released with semantic versioning ("semver") versions, so edge application administrators are able to distinguish release sequences and compatibility breaks. In one or more embodiments, models can follow a naming and versioning scheme defined in a model registry, such as the NVIDIA GPU Cloud (NGC) Model Registry, from NVIDIA Corporation. In order to be available for pulling to edge locations, models may be hosted in a software hub, such as NVIDIA GPU Cloud (NGC). In NGC, models can be public and guest-accessible, or in a private area that requires a customer account and credentials (*e*.*g*., APIKey) for access.

In at least some embodiments, a model fetcher 204 can be used to fetch models from software hubs, such as a remote model store 206 or NGC, to an edge computing system (e.g., EGX) in edge locations, as illustrated in FIG. 2. According to one or more embodiments, a model fetcher 204 can read a model manifest file 216, which may list model repositories to be monitored, such as on NGC, and may list specific versions to be downloaded from the model store 206 when they become available, and the version specification may be wildcarded in order to insert "wildcards" or other characters (*e*.*g*., "*") that can then match future characters or future sequences of characters for one or more versions. The model manifest file 216 may also specify a destination directory 212, such as on an EGX node, at which the models will be stored and mounted into application containers. In some embodiments the model fetcher 204 periodically scans the model manifest file 216, and can check the NGC Registry, for example, for matching model versions. Any model versions that are missing from the destination directory may be fetched and stored. The model fetcher 204 may also periodically call an EMS API to provide a current list of available models and versions.

In at least one embodiment, an edge manager 208 can specify models and model versions to be used by an application as part of a deployment configuration. When the edge manager 208 updates a deployment and the only update involves one or more model version differences, the application can identify that update and switch to the new model version without exiting. The deployment update can be performed in at least one embodiment by updating a configuration map (*e*.*g*., configmap) that is mounted to the relevant application container. The application can detect that the configmap has been updated, such as by using inotify. When an application detects that it is requested to change model versions, the application can stop using the current model version and start using the new model version, which in some embodiments might always refer to the latest version. This may be done in at least one embodiment by creating a new software context in the application, to which the new model is loaded. When the new software context is ready, the inference stream is switched to the new context and the old context is deleted. As with a deployment update, a model update deployment can be rolled back, such as by using Helm functionality. In one or more embodiments, an application may again recognize that the only change in its configuration is the model version and repeat the steps for switching model versions described above to switch back to a previous version. In at least one embodiment, other application collateral than a model can be dynamically switched as well using such an approach, as may relate to graphic resources and the like.

In at least some embodiments, a process for updating a neural network model for an edge inferencing application can involve the edge inferencing application (*e*.*g*., DeepStream from NVIDIA Corporation) image being deployed with one or more neural network models for performing inferencing included in a container image. According to such embodiments, the edge inferencing application can use a deep learning inferencing platform such as TensorRT for model management. Local storage 210 that includes one or more models can be read-only mounted into an edge application container 220. In one or more embodiments, the edge application 202 (*e*.*g*., DeepStream) may use an Edge Manager 208, such as TensorRT, for model management. In one or more embodiments, local storage 210 on an edge node (*e.g.,* an EGX node) may be manually provisioned with models. In at least one embodiment, an analytics server 214 or client can be in communication with the container 220 in order to run various analytics as discussed herein.

Local storage 210, such as a local storage volume, can be populated with versioned models in various model directories 212. In one or more embodiments, the application 202 may use an edge manager 208 for model management, as well as to run models stored in a mounted local volume. According to such embodiments, local storage on the edge node may include a separate directory per model, with a separate sub directory per model version. A model fetcher 204 component can bring models from a model store 206, such as a cloud repository or other such source, to the edge node. In at least one embodiment, an edge node stack component can fetch models from the model store 206 to the edge node and write them to the appropriate model directory 212 through a read/write mount. Such architecture can work for applications that use other approaches for model management as well, such as Triton. For example, another edge inference application, such as Clara by NVIDIA Corporation, may use Triton for model management.

In at least one embodiment, a model fetcher 204 can perform tasks such as to manage a model volume mount per application. A model fetcher can fetch models from a model store 206 according to a manifest and at least one policy, which may indicate a frequency (*e*.*g*., daily or hourly) with which to check for updates. This model fetcher 204 can cause models to be converted to an appropriate format (*e*.*g*., Triton) if necessary, and can write each model to an appropriate versioned directory, or sub-directory, for that model. The model fetcher 204 can also maintain an inventory of all models and versions that are stored on a given edge node or in a given storage volume. In an embodiment with multiple servers at an edge location, those servers can each pull a model version, such as by using a provided URL, or the model can be pulled or pushed once to a mounted volume that can point to all three servers so those servers can get the model version locally.

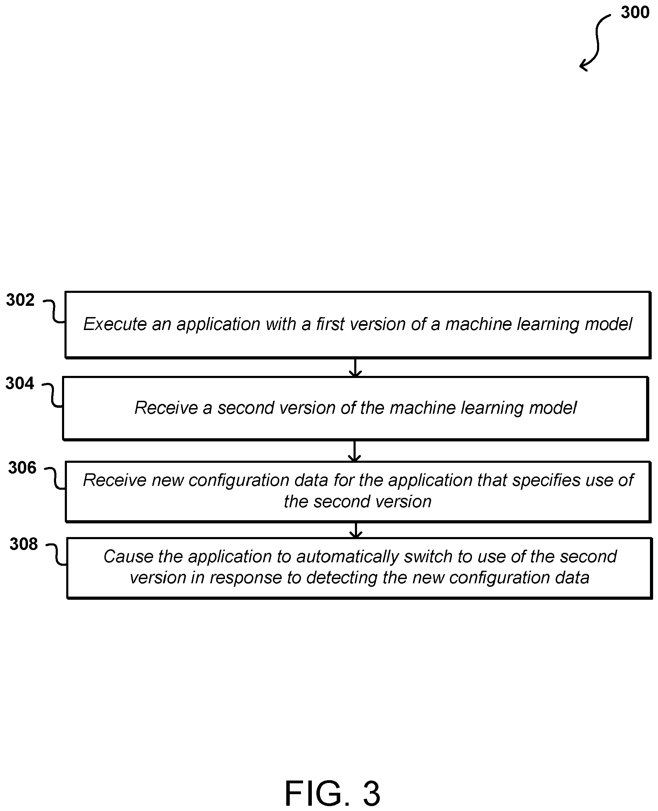

FIG. 3 illustrates an example process 300 for updating a model version for use by an application that can be utilized in accordance with various embodiments. It should be understood for this and other processes discussed herein that there can be additional, alternative, or fewer steps performed in similar or at least partially alternative orders, or in parallel, within the scope of the various embodiments unless otherwise stated. In this example, an application is executed 302 with a first version of a machine learning model. This application can be an inferencing application run in a data center, at a network edge, or at another appropriate location. During execution of the application, a second version of the machine learning model can be received 304 or otherwise obtained, from a source such as a model provider or model repository. New configuration data can be received 306, generated, or otherwise obtained that specifies use of the second version with the application. In response, the application can be caused 308 to automatically switch to use of the second version, with little to no downtime for the inferencing application. In this example, the first version of the model can then be deleted, at least from a container or other environment associated with the inferencing application.

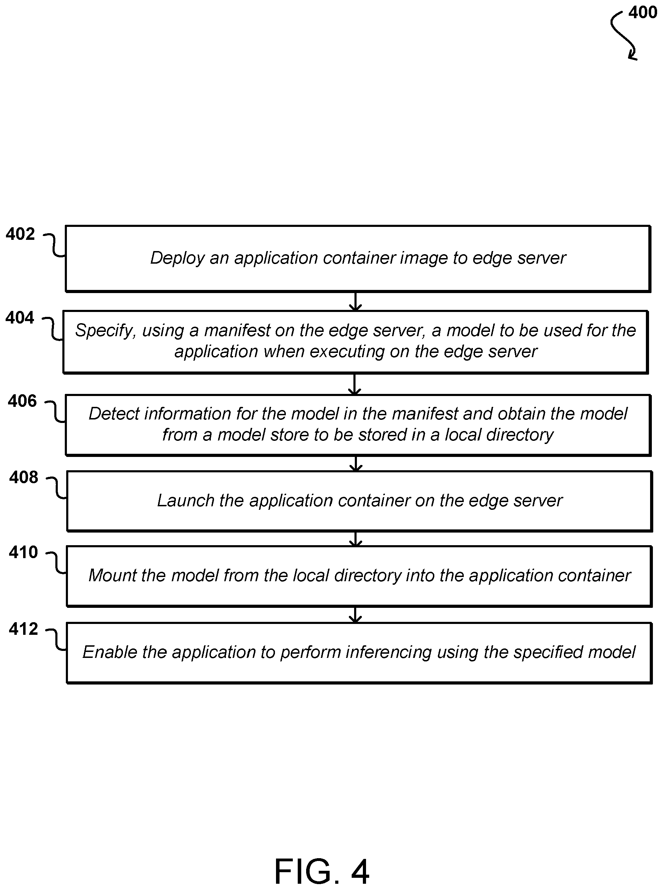

FIG. 4 illustrates an example process 400 for deploying a model for an inferencing application that can be utilized in accordance with at least one embodiment. In this example, an application container image can be deployed 402 to an edge server, such as may be one of a number of edge servers that are to host an inferencing application associated with the container. A manifest on the edge server can be updated to specify 404 a machine learning model that is to be used for the inferencing application when executing on the edge server. Information for this model can be detected 406 in the manifest, and the corresponding model (and version, etc.) can be obtained from a model store, or other such source, and stored in a local directory, such as a model-specific directory or sub-directory of a local storage volume. At an appropriate time, the application container can be launched 408 on the edge server. As part of the launch process in this example, the model can be mounted 410 from the local directory into the application container for use by the inferencing application. The application is then enabled 412 to identify and switch to use of the model, as appropriate, to perform inferencing using the specified model. In embodiments where a container may be deployed with a default model, the inferencing application can be enabled to switch to the specified model little to no down time.

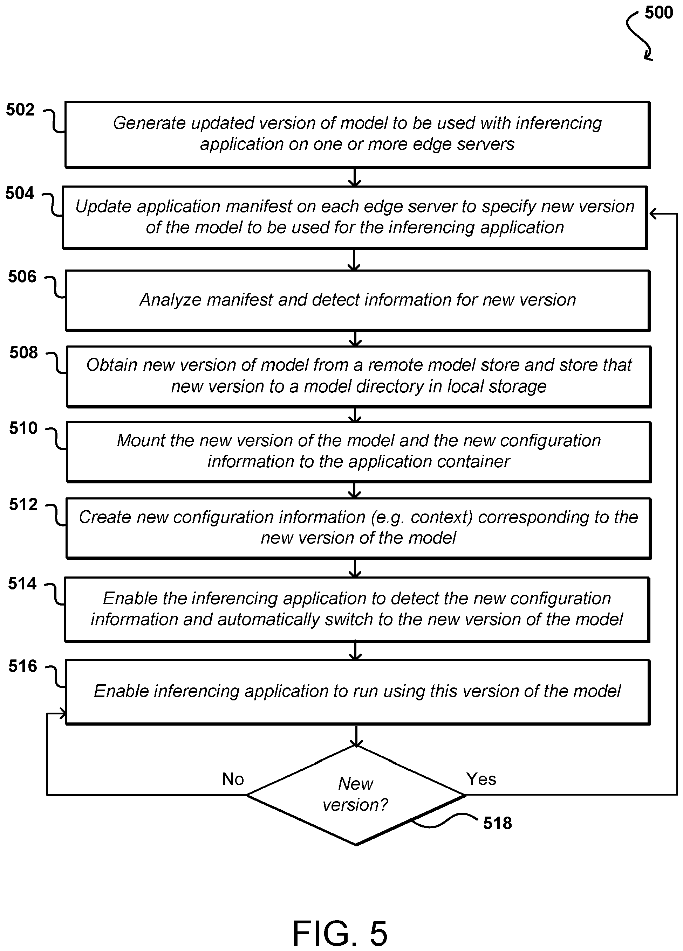

FIG. 5 illustrates an example process 500 for updating a model to be used for an inferencing application, such as described in the process 400 of FIG. 4. In this example, an updated (or otherwise different) version of a model is generated 502 that is to be used with an inferencing application on one or more edge servers, or other such locations. An application manifest can be updated 504 on each edge server to specify the new version of the model (or a new model, if applicable) to be used for the inferencing application. On individual edge servers, the manifest can be analyzed 506 and information for the new version detected. The new version of the model can then be obtained 508 from a remote model store, or other such location, and that version can be stored to a model directory, or sub-directory, in local storage on the edge server or node. In at least some embodiments, the model can be obtained by a model fetcher on the edge server. A new version of the model can be mounted 510 to the application container along with the new configuration information. New or updated configuration information, or application context, can be created 512 or otherwise obtained that corresponds, or points, to the new version of the model. The inferencing application, while executing on the edge server, can be enabled 514 to detect the new configuration information and automatically switch to the new version of the model, with little to no effect on the availability of the inferencing application. This can include the application detecting the new configuration information or context, determining that the new context is properly loaded and ready, with appropriate buffering, and then switching to the new model version without missing a frame or other instance of input. In at least some embodiments, the prior version of the model can be deleted from the application container. The inferencing application can then be enabled 516 to run using this version of the model. If it is determined 518 that there is a new model then the application manifest can be updated to specify the new version, and the steps of the process for updating the model can be repeated.

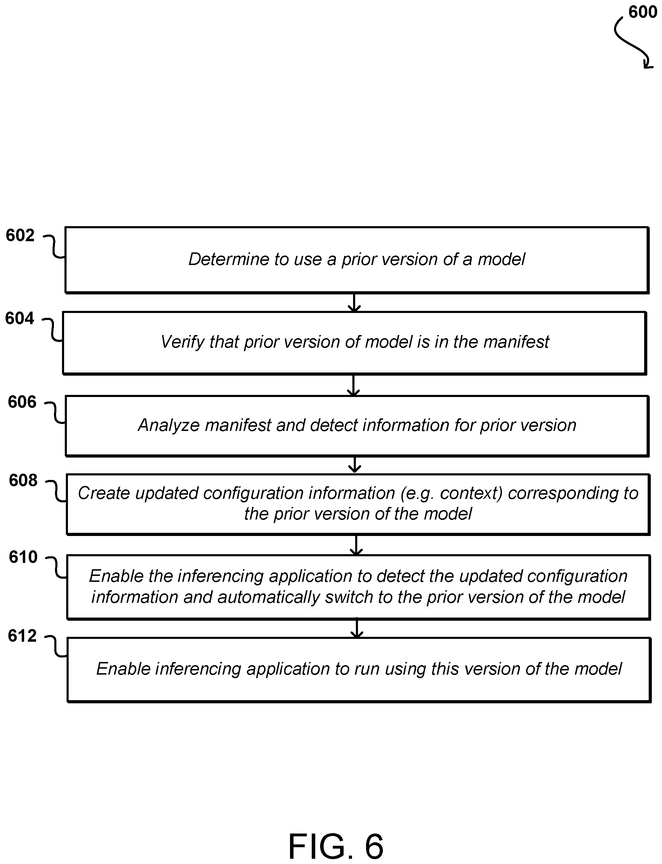

FIG. 6 illustrates an example process 600 for switching to a prior version of a model that can be utilized in accordance with various embodiments. This process 600 might be used after a process was utilized to update to a new version of the model, such as discussed with respect to FIG. 5. In this example, it is determined 602 to use a prior version of a model, such as where a current version is not operating as expected or it is determined that a different version should be utilized for a particular edge server or other deployment. This might also be the case where different versions are used at different times, for different workloads, or for other such reasons. In this example, it is verified 604 that the prior version of the model exists in the manifest. The manifest can be analyzed 606 to obtain information for the prior version. In some embodiments, a check can be made to verify that the prior version is still located in local storage, and if not, then the prior version can be obtained from a model store or other such source. Updated configuration information (*e*.*g*., application context) can be created 608 that corresponds to the prior version of the model. The inferencing application can be enabled 610 to detect the updated configuration information and automatically switch to the prior version of the model. In at least one embodiment the version of the model that is no longer being used can then be deleted from the application container. The inferencing application can then be enabled 612 to run using this version of the model.

As mentioned, such a process can be used to revert to a previous version if there is a potential problem detected with a new version, or can be used to switch between versions of a model at various times, such as when a particular version is determined to be preferable to a current model being used for inferencing. In at least some embodiments, each version of one or more models to be used for an edge application can be pushed to each edge server to host that application, then those applications can switch versions using the versions stored locally. The decision to switch versions can be made remotely, but the actual switching can be performed locally at the edge without any downtime, sideband communication, or additional steps. As mentioned, this can also result in different applications using different versions of a model at different times or under different conditions. There can be one or more policies in place that indicate which models to use at which times or under which conditions, and these policies can be used to allow for local model switching in at least some embodiments. One example, non-limiting policy could be to always use the most recent model or version. In some embodiments, context or configuration information can be stored in local memory for multiple model versions, and this stored configuration information can be used to dynamically switch contexts in order to cause the application to switch to different versions.

As mentioned, different container technologies, such as Kubernetes or Docker, may be used for different embodiments. For a Kubernetes-based approach, a Kubernetes configuration map mechanism can be used to update a configuration file accessible to the application executing at the edge. A change to this configuration file can act as a signaling mechanism that something has changed, whereby the application can determine the model version to be used and automatically switch to that version. In this example, the change to the configuration file can be triggered by a change to the configuration mapping. Kubernetes will automatically update the application configuration file in response to a change to such a configuration mapping. In at least one embodiment, one or more APIs can be exposed that enable this configuration mapping to be updated, such as by a remote administrator console. Such a process can be used for resources other than models as well, such as for updating to different versions of textures, maps, algorithms, modules, or audio files for a game hosted at a network edge, without changes to the application code or downtime in its execution.

### INFERENCE AND TRAINING LOGIC

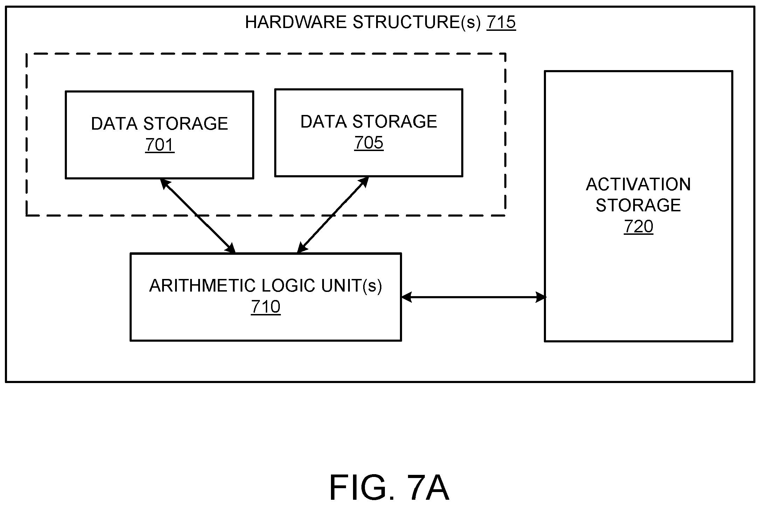

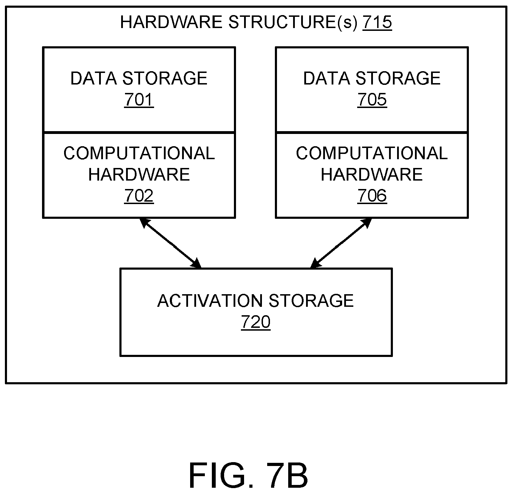

FIG. 7a illustrates inference and/or training logic 715 used to perform inferencing and/or training operations associated with one or more embodiments. Details regarding inference and/or training logic 715 are provided below in conjunction with FIGS. 7A and/or 7B.

In at least one embodiment, inference and/or training logic 715 may include, without limitation, code and/or data storage 701 to store forward and/or output weight and/or input/output data, and/or other parameters to configure neurons or layers of a neural network trained and/or used for inferencing in aspects of one or more embodiments. In at least one embodiment, training logic 715 may include, or be coupled to code and/or data storage 701 to store graph code or other software to control timing and/or order, in which weight and/or other parameter information is to be loaded to configure, logic, including integer and/or floating point units (collectively, arithmetic logic units (ALUs). In at least one embodiment, code, such as graph code, loads weight or other parameter information into processor ALUs based on an architecture of a neural network to which the code corresponds. In at least one embodiment, code and/or data storage 701 stores weight parameters and/or input/output data of each layer of a neural network trained or used in conjunction with one or more embodiments during forward propagation of input/output data and/or weight parameters during training and/or inferencing using aspects of one or more embodiments. In at least one embodiment, any portion of code and/or data storage 701 may be included with other on-chip or off-chip data storage, including a processor's L1, L2, or L3 cache or system memory.

In at least one embodiment, any portion of code and/or data storage 701 may be internal or external to one or more processors or other hardware logic devices or circuits. In at least one embodiment, code and/or code and/or data storage 701 may be cache memory, dynamic randomly addressable memory ("DRAM"), static randomly addressable memory ("SRAM"), non-volatile memory (e.g., Flash memory), or other storage. In at least one embodiment, choice of whether code and/or code and/or data storage 701 is internal or external to a processor, for example, or comprised of DRAM, SRAM, Flash or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 715 may include, without limitation, a code and/or data storage 705 to store backward and/or output weight and/or input/output data corresponding to neurons or layers of a neural network trained and/or used for inferencing in aspects of one or more embodiments. In at least one embodiment, code and/or data storage 705 stores weight parameters and/or input/output data of each layer of a neural network trained or used in conjunction with one or more embodiments during backward propagation of input/output data and/or weight parameters during training and/or inferencing using aspects of one or more embodiments. In at least one embodiment, training logic 715 may include, or be coupled to code and/or data storage 705 to store graph code or other software to control timing and/or order, in which weight and/or other parameter information is to be loaded to configure, logic, including integer and/or floating point units (collectively, arithmetic logic units (ALUs). In at least one embodiment, code, such as graph code, loads weight or other parameter information into processor ALUs based on an architecture of a neural network to which the code corresponds. In at least one embodiment, any portion of code and/or data storage 705 may be included with other on-chip or off-chip data storage, including a processor's L1, L2, or L3 cache or system memory. In at least one embodiment, any portion of code and/or data storage 705 may be internal or external to on one or more processors or other hardware logic devices or circuits. In at least one embodiment, code and/or data storage 705 may be cache memory, DRAM, SRAM, non-volatile memory (e.g., Flash memory), or other storage. In at least one embodiment, choice of whether code and/or data storage 705 is internal or external to a processor, for example, or comprised of DRAM, SRAM, Flash or some other storage type may depend on available storage on-chip versus off-chip, latency requirements of training and/or inferencing functions being performed, batch size of data used in inferencing and/or training of a neural network, or some combination of these factors.

In at least one embodiment, code and/or data storage 701 and code and/or data storage 705 may be separate storage structures. In at least one embodiment, code and/or data storage 701 and code and/or data storage 705 may be same storage structure. In at least one embodiment, code and/or data storage 701 and code and/or data storage 705 may be partially same storage structure and partially separate storage structures. In at least one embodiment, any portion of code and/or data storage 70 1 and code and/or data storage 705 may be included with other on-chip or off-chip data storage, including a processor's L1, L2, or L3 cache or system memory.

In at least one embodiment, inference and/or training logic 715 may include, without limitation, one or more arithmetic logic unit(s) ("ALU(s)") 710, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 720 that are functions of input/output and/or weight parameter data stored in code and/or data storage 701 and/or code and/or data storage 705. In at least one embodiment, activations stored in activation storage 720 are generated according to linear algebraic and or matrix-based mathematics performed by ALU(s) 710 in response to performing instructions or other code, wherein weight values stored in code and/or data storage 705 and/or code and/or data storage 701 are used as operands along with other values, such as bias values, gradient information, momentum values, or other parameters or hyperparameters, any or all of which may be stored in code and/or data storage 705 or code and/or data storage 701 or another storage on or off-chip.

In at least one embodiment, ALU(s) 710 are included within one or more processors or other hardware logic devices or circuits, whereas in another embodiment, ALU(s) 710 may be external to a processor or other hardware logic device or circuit that uses them (e.g., a coprocessor). In at least one embodiment, ALUs 710 may be included within a processor's execution units or otherwise within a bank of ALUs accessible by a processor's execution units either within same processor or distributed between different processors of different types (e.g., central processing units, graphics processing units, fixed function units, etc.). In at least one embodiment, code and/or data storage 701, code and/or data storage 705, and activation storage 720 may be on same processor or other hardware logic device or circuit, whereas in another embodiment, they may be in different processors or other hardware logic devices or circuits, or some combination of same and different processors or other hardware logic devices or circuits. In at least one embodiment, any portion of activation storage 720 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

In at least one embodiment, activation storage 720 may be cache memory, DRAM, SRAM, non-volatile memory (e.g., Flash memory), or other storage. In at least one embodiment, activation storage 720 may be completely or partially within or external to one or more processors or other logical circuits. In at least one embodiment, choice of whether activation storage 720 is internal or external to a processor, for example, or comprised of DRAM, SRAM, Flash or some other storage type may depend on available storage on-chip versus off-chip, latency requirements of training and/or inferencing functions being performed, batch size of data used in inferencing and/or training of a neural network, or some combination of these factors. In at least one embodiment, inference and/or training logic 715 illustrated in FIG. 7a may be used in conjunction with an application-specific integrated circuit ("ASIC"), such as Tensorflow^{®} Processing Unit from Google, an inference processing unit (IPU) from Graphcore^{™}, or a Nervana^{®} (e.g., "Lake Crest") processor from Intel Corp. In at least one embodiment, inference and/or training logic 715 illustrated in FIG. 7a may be used in conjunction with central processing unit ("CPU") hardware, graphics processing unit ("GPU") hardware or other hardware, such as field programmable gate arrays ("FPGAs").

FIG. 7b illustrates inference and/or training logic 715, according to at least one or more embodiments. In at least one embodiment, inference and/or training logic 715 may include, without limitation, hardware logic in which computational resources are dedicated or otherwise exclusively used in conjunction with weight values or other information corresponding to one or more layers of neurons within a neural network. In at least one embodiment, inference and/or training logic 715 illustrated in FIG. 7b may be used in conjunction with an application-specific integrated circuit (ASIC), such as Tensorflow^{®} Processing Unit from Google, an inference processing unit (IPU) from Graphcore^{™}, or a Nervana^{®} (e.g., "Lake Crest") processor from Intel Corp. In at least one embodiment, inference and/or training logic 715 illustrated in FIG. 7b may be used in conjunction with central processing unit (CPU) hardware, graphics processing unit (GPU) hardware or other hardware, such as field programmable gate arrays (FPGAs). In at least one embodiment, inference and/or training logic 715 includes, without limitation, code and/or data storage 701 and code and/or data storage 705, which may be used to store code (e.g., graph code), weight values and/or other information, including bias values, gradient information, momentum values, and/or other parameter or hyperparameter information. In at least one embodiment illustrated in FIG. 7b, each of code and/or data storage 701 and code and/or data storage 705 is associated with a dedicated computational resource, such as computational hardware 702 and computational hardware 706, respectively. In at least one embodiment, each of computational hardware 702 and computational hardware 706 comprises one or more ALUs that perform mathematical functions, such as linear algebraic functions, only on information stored in code and/or data storage 701 and code and/or data storage 705, respectively, result of which is stored in activation storage 720.

In at least one embodiment, each of code and/or data storage 701 and 705 and corresponding computational hardware 702 and 706, respectively, correspond to different layers of a neural network, such that resulting activation from one "storage/computational pair 701/702" of code and/or data storage 701 and computational hardware 702 is provided as an input to "storage/computational pair 705/706" of code and/or data storage 705 and computational hardware 706, in order to mirror conceptual organization of a neural network. In at least one embodiment, each of storage/computational pairs 701/702 and 705/706 may correspond to more than one neural network layer. In at least one embodiment, additional storage/computation pairs (not shown) subsequent to or in parallel with storage computation pairs 701/702 and 705/706 may be included in inference and/or training logic 715.

### DATA CENTER

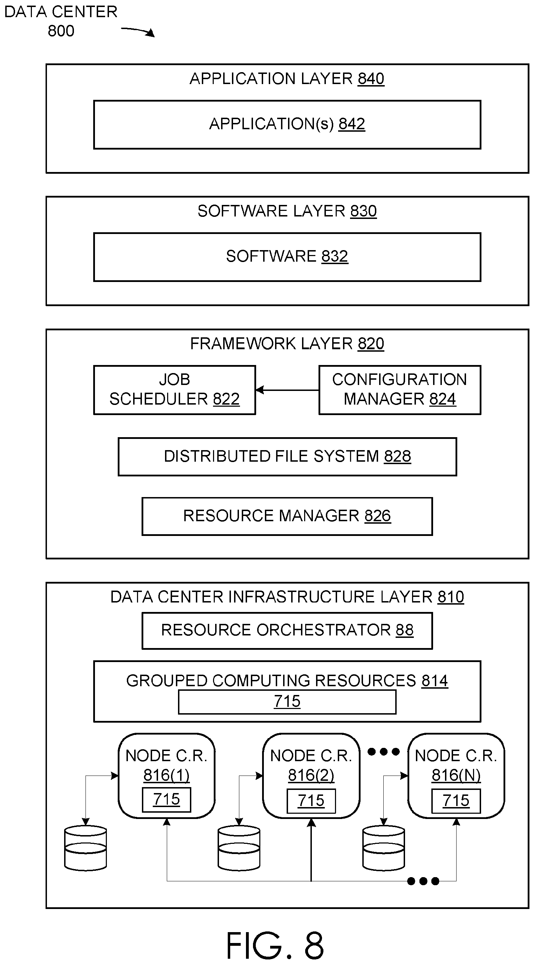

FIG. 8 illustrates an example data center 800, in which at least one embodiment may be used. In at least one embodiment, data center 800 includes a data center infrastructure layer 810, a framework layer 820, a software layer 830, and an application layer 840.

In at least one embodiment, as shown in FIG. 8, data center infrastructure layer 810 may include a resource orchestrator 812, grouped computing resources 814, and node computing resources ("node C.R.s") 816(1)-816(N), where "N" represents any whole, positive integer. In at least one embodiment, node C.R.s 816(1)-816(N) may include, but are not limited to, any number of central processing units ("CPUs") or other processors (including accelerators, field programmable gate arrays (FPGAs), graphics processors, etc.), memory devices (e.g., dynamic read-only memory), storage devices (e.g., solid state or disk drives), network input/output ("NW I/O") devices, network switches, virtual machines ("VMs"), power modules, and cooling modules, etc. In at least one embodiment, one or more node C.R.s from among node C.R.s 816(1)-816(N) may be a server having one or more of above-mentioned computing resources.

In at least one embodiment, grouped computing resources 814 may include separate groupings of node C.R.s housed within one or more racks (not shown), or many racks housed in data centers at various geographical locations (also not shown). Separate groupings of node C.R.s within grouped computing resources 814 may include grouped compute, network, memory or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 812 may configure or otherwise control one or more node C.R.s 816(1)-816(N) and/or grouped computing resources 814. In at least one embodiment, resource orchestrator 812 may include a software design infrastructure ("SDI") management entity for data center 800. In at least one embodiment, resource orchestrator may include hardware, software or some combination thereof.

In at least one embodiment, as shown in FIG. 8, framework layer 820 includes a job scheduler 822, a configuration manager 824, a resource manager 826 and a distributed file system 828. In at least one embodiment, framework layer 820 may include a framework to support software 832 of software layer 830 and/or one or more application(s) 842 of application layer 840. In at least one embodiment, software 832 or application(s) 842 may respectively include web-based service software or applications, such as those provided by Amazon Web Services, Google Cloud and Microsoft Azure. In at least one embodiment, framework layer 820 may be, but is not limited to, a type of free and open-source software web application framework such as Apache Spark^{™} (hereinafter "Spark") that may utilize distributed file system 828 for large-scale data processing (e.g., "big data"). In at least one embodiment, job scheduler 822 may include a Spark driver to facilitate scheduling of workloads supported by various layers of data center 800. In at least one embodiment, configuration manager 824 may be capable of configuring different layers such as software layer 830 and framework layer 820 including Spark and distributed file system 828 for supporting large-scale data processing. In at least one embodiment, resource manager 826 may be capable of managing clustered or grouped computing resources mapped to or allocated for support of distributed file system 828 and job scheduler 822. In at least one embodiment, clustered or grouped computing resources may include grouped computing resource 814 at data center infrastructure layer 810. In at least one embodiment, resource manager 826 may coordinate with resource orchestrator 812 to manage these mapped or allocated computing resources.

In at least one embodiment, software 832 included in software layer 830 may include software used by at least portions of node C.R.s 816(1)-816(N), grouped computing resources 814, and/or distributed file system 828 of framework layer 820. The one or more types of software may include, but are not limited to, Internet web page search software, e-mail virus scan software, database software, and streaming video content software.

In at least one embodiment, application(s) 842 included in application layer 840 may include one or more types of applications used by at least portions of node C.R.s 816(1)-816(N), grouped computing resources 814, and/or distributed file system 828 of framework layer 820. One or more types of applications may include, but are not limited to, any number of a genomics application, a cognitive compute, and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 824, resource manager 826, and resource orchestrator 812 may implement any number and type of self-modifying actions based on any amount and type of data acquired in any technically feasible fashion. In at least one embodiment, self-modifying actions may relieve a data center operator of data center 800 from making possibly bad configuration decisions and possibly avoiding underutilized and/or poor performing portions of a data center.

In at least one embodiment, data center 800 may include tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 800. In at least one embodiment, trained machine learning models corresponding to one or more neural networks may be used to infer or predict information using resources described above with respect to data center 800 by using weight parameters calculated through one or more training techniques described herein.

In at least one embodiment, data center may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Inference and/or training logic 715 are used to perform inferencing and/or training operations associated with one or more embodiments. Details regarding inference and/or training logic 715 are provided below in conjunction with FIGs. 7A and/or 7B. In at least one embodiment, inference and/or training logic 715 may be used in system FIG. 8 for inferencing or predicting operations based, at least in part, on weight parameters calculated using neural network training operations, neural network functions and/or architectures, or neural network use cases described herein.

Such components can be used to perform a live updating of machine learning models, for applications running at locations such as a network edge. This updating can be performed without any, or any significant, downtime of the application in switching to a different model version.

### COMPUTER SYSTEMS

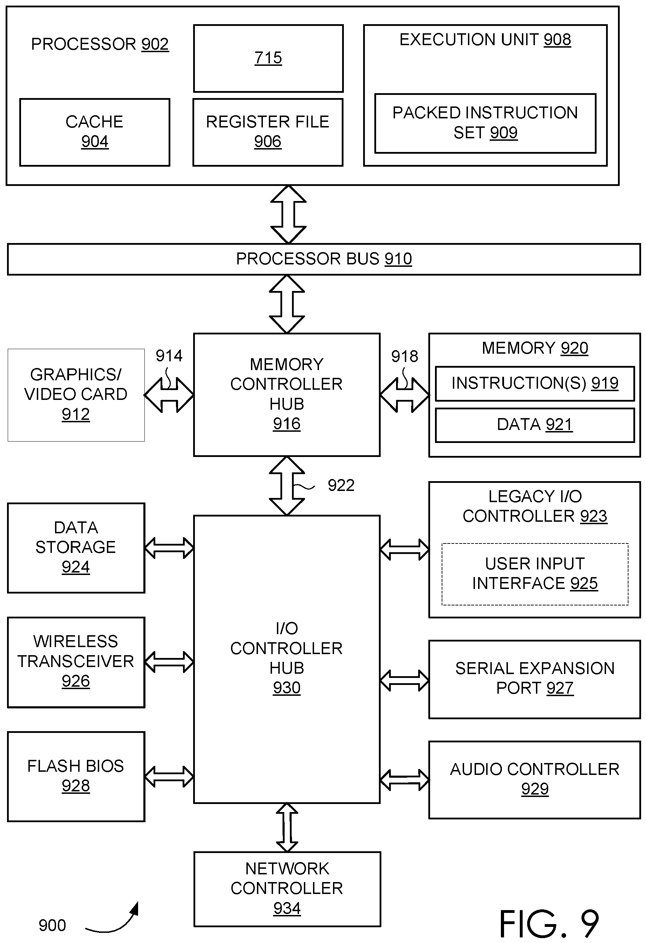

FIG. 9 is a block diagram illustrating an exemplary computer system, which may be a system with interconnected devices and components, a system-on-a-chip (SOC) or some combination thereof 900 formed with a processor that may include execution units to execute an instruction, according to at least one embodiment. In at least one embodiment, computer system 900 may include, without limitation, a component, such as a processor 902 to employ execution units including logic to perform algorithms for process data, in accordance with present disclosure, such as in embodiment described herein. In at least one embodiment, computer system 900 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 900 may execute a version of WINDOWS' operating system available from Microsoft Corporation of Redmond, Wash., although other operating systems (UNIX and Linux for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, computer system 900 may include, without limitation, processor 902 that may include, without limitation, one or more execution units 908 to perform machine learning model training and/or inferencing according to techniques described herein. In at least one embodiment, computer system 900 is a single processor desktop or server system, but in another embodiment computer system 900 may be a multiprocessor system. In at least one embodiment, processor 902 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 902 may be coupled to a processor bus 910 that may transmit data signals between processor 902 and other components in computer system 900.

In at least one embodiment, processor 902 may include, without limitation, a Level 1 ("L1") internal cache memory ("cache") 904. In at least one embodiment, processor 902 may have a single internal cache or multiple levels of internal cache. In at least one embodiment, cache memory may reside external to processor 902. Other embodiments may also include a combination of both internal and external caches depending on particular implementation and needs. In at least one embodiment, register file 906 may store different types of data in various registers including, without limitation, integer registers, floating point registers, status registers, and instruction pointer register.

In at least one embodiment, execution unit 908, including, without limitation, logic to perform integer and floating point operations, also resides in processor 902. In at least one embodiment, processor 902 may also include a microcode ("ucode") read only memory ("ROM") that stores microcode for certain macro instructions. In at least one embodiment, execution unit 908 may include logic to handle a packed instruction set 909. In at least one embodiment, by including packed instruction set 909 in an instruction set of a general-purpose processor 902, along with associated circuitry to execute instructions, operations used by many multimedia applications may be performed using packed data in a general-purpose processor 902. In one or more embodiments, many multimedia applications may be accelerated and executed more efficiently by using full width of a processor's data bus for performing operations on packed data, which may eliminate need to transfer smaller units of data across processor's data bus to perform one or more operations one data element at a time.

In at least one embodiment, execution unit 908 may also be used in microcontrollers, embedded processors, graphics devices, DSPs, and other types of logic circuits. In at least one embodiment, computer system 900 may include, without limitation, a memory 920. In at least one embodiment, memory 920 may be implemented as a Dynamic Random Access Memory ("DRAM") device, a Static Random Access Memory ("SRAM") device, flash memory device, or other memory device. In at least one embodiment, memory 920 may store instruction(s) 919 and/or data 921 represented by data signals that may be executed by processor 902.

In at least one embodiment, system logic chip may be coupled to processor bus 910 and memory 920. In at least one embodiment, system logic chip may include, without limitation, a memory controller hub ("MCH") 916, and processor 902 may communicate with MCH 916 via processor bus 910. In at least one embodiment, MCH 916 may provide a high bandwidth memory path 918 to memory 920 for instruction and data storage and for storage of graphics commands, data and textures. In at least one embodiment, MCH 916 may direct data signals between processor 902, memory 920, and other components in computer system 900 and to bridge data signals between processor bus 910, memory 920, and a system I/O 922. In at least one embodiment, system logic chip may provide a graphics port for coupling to a graphics controller. In at least one embodiment, MCH 916 may be coupled to memory 920 through a high bandwidth memory path 918 and graphics/video card 912 may be coupled to MCH 916 through an Accelerated Graphics Port ("AGP") interconnect 914.

In at least one embodiment, computer system 900 may use system I/O 922 that is a proprietary hub interface bus to couple MCH 916 to I/O controller hub ("ICH") 930. In at least one embodiment, ICH 930 may provide direct connections to some I/O devices via a local I/O bus. In at least one embodiment, local I/O bus may include, without limitation, a high-speed I/O bus for connecting peripherals to memory 920, chipset, and processor 902. Examples may include, without limitation, an audio controller 929, a firmware hub ("flash BIOS") 928, a wireless transceiver 926, a data storage 924, a legacy I/O controller 923 containing user input and keyboard interfaces 925, a serial expansion port 927, such as Universal Serial Bus ("USB"), and a network controller 934. Data storage 924 may comprise a hard disk drive, a floppy disk drive, a CD-ROM device, a flash memory device, or other mass storage device.

In at least one embodiment, FIG. 9 illustrates a system, which includes interconnected hardware devices or "chips", whereas in other embodiments, FIG. 9 may illustrate an exemplary System on a Chip ("SoC"). In at least one embodiment, devices may be interconnected with proprietary interconnects, standardized interconnects (e.g., PCIe) or some combination thereof. In at least one embodiment, one or more components of computer system 900 are interconnected using compute express link (CXL) interconnects.

Inference and/or training logic 715 are used to perform inferencing and/or training operations associated with one or more embodiments. Details regarding inference and/or training logic 715 are provided below in conjunction with FIGS. 7A and/or 7B. In at least one embodiment, inference and/or training logic 715 may be used in system FIG. 9 for inferencing or predicting operations based, at least in part, on weight parameters calculated using neural network training operations, neural network functions and/or architectures, or neural network use cases described herein.

Such components can be used to perform a live updating of machine learning models, for applications running at locations such as a network edge. This updating can be performed without any, or any significant, downtime of the application in switching to a different model version.

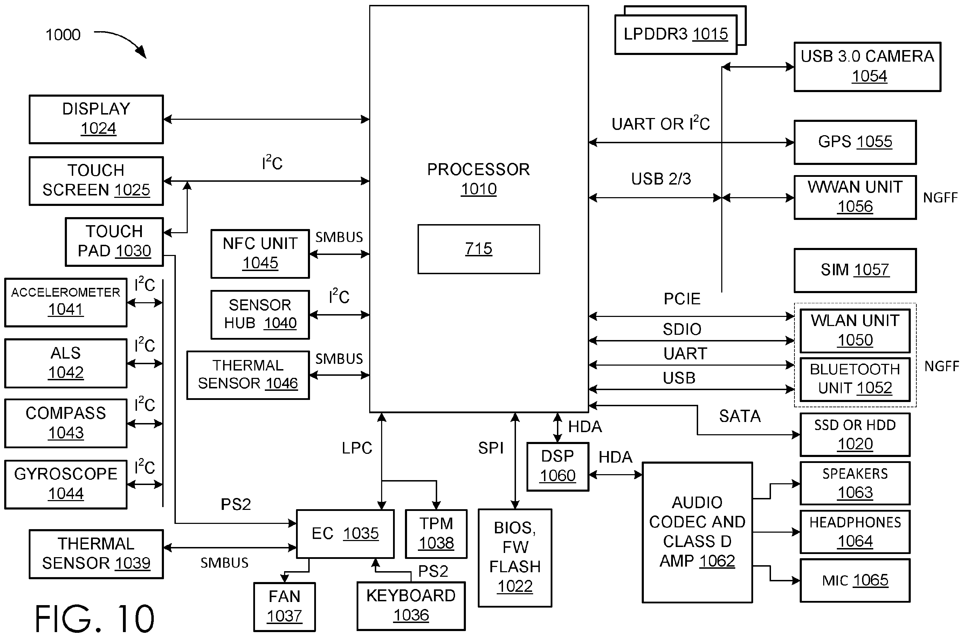

FIG. 10 is a block diagram illustrating an electronic device 1000 for utilizing a processor 1010, according to at least one embodiment. In at least one embodiment, electronic device 1000 may be, for example and without limitation, a notebook, a tower server, a rack server, a blade server, a laptop, a desktop, a tablet, a mobile device, a phone, an embedded computer, or any other suitable electronic device.

In at least one embodiment, system 1000 may include, without limitation, processor 1010 communicatively coupled to any suitable number or kind of components, peripherals, modules, or devices. In at least one embodiment, processor 1010 coupled using a bus or interface, such as a 1°C bus, a System Management Bus ("SMBus"), a Low Pin Count (LPC) bus, a Serial Peripheral Interface ("SPI"), a High Definition Audio ("HDA") bus, a Serial Advance Technology Attachment ("SATA") bus, a Universal Serial Bus ("USB") (versions 1, 2, 3), or a Universal Asynchronous Receiver/Transmitter ("UART") bus. In at least one embodiment, FIG. 10 illustrates a system, which includes interconnected hardware devices or "chips", whereas in other embodiments, FIG. 10 may illustrate an exemplary System on a Chip ("SoC"). In at least one embodiment, devices illustrated in FIG. 10 may be interconnected with proprietary interconnects, standardized interconnects (e.g., PCIe) or some combination thereof. In at least one embodiment, one or more components of FIG. 10 are interconnected using compute express link (CXL) interconnects.

In at least one embodiment, FIG 10 may include a display 1024, a touch screen 1025, a touch pad 1030, a Near Field Communications unit ("NFC") 1045, a sensor hub 1040, a thermal sensor 1046, an Express Chipset ("EC") 1035, a Trusted Platform Module ("TPM") 1038, BIOS/firmware/flash memory ("BIOS, FW Flash") 1022, a DSP 1060, a drive 1020 such as a Solid State Disk ("SSD") or a Hard Disk Drive ("HDD"), a wireless local area network unit ("WLAN") 1050, a Bluetooth unit 1052, a Wireless Wide Area Network unit ("WWAN") 1056, a Global Positioning System (GPS) 1055, a camera ("USB 3.0 camera") 1054 such as a USB 3.0 camera, and/or a Low Power Double Data Rate ("LPDDR") memory unit ("LPDDR3") 1015 implemented in, for example, LPDDR3 standard. These components may each be implemented in any suitable manner.

In at least one embodiment, other components may be communicatively coupled to processor 1010 through components discussed above. In at least one embodiment, an accelerometer 1041, Ambient Light Sensor ("ALS") 1042, compass 1043, and a gyroscope 1044 may be communicatively coupled to sensor hub 1040. In at least one embodiment, thermal sensor 1039, a fan 1037, a keyboard 1046, and a touch pad 1030 may be communicatively coupled to EC 1035. In at least one embodiment, speaker 1063, headphones 1064, and microphone ("mic") 1065 may be communicatively coupled to an audio unit ("audio codec and class d amp") 1062, which may in turn be communicatively coupled to DSP 1060. In at least one embodiment, audio unit 1064 may include, for example and without limitation, an audio coder/decoder ("codec") and a class D amplifier. In at least one embodiment, SIM card ("SIM") 1057 may be communicatively coupled to WWAN unit 1056. In at least one embodiment, components such as WLAN unit 1050 and Bluetooth unit 1052, as well as WWAN unit 1056 may be implemented in a Next Generation Form Factor ("NGFF").

Inference and/or training logic 715 are used to perform inferencing and/or training operations associated with one or more embodiments. Details regarding inference and/or training logic 715 are provided below in conjunction with FIGs. 7a and/or 7b. In at least one embodiment, inference and/or training logic 715 may be used in system FIG. 10 for inferencing or predicting operations based, at least in part, on weight parameters calculated using neural network training operations, neural network functions and/or architectures, or neural network use cases described herein.

Such components can be used to perform a live updating of machine learning models, for applications running at locations such as a network edge. This updating can be performed without any, or any significant, downtime of the application in switching to a different model version.

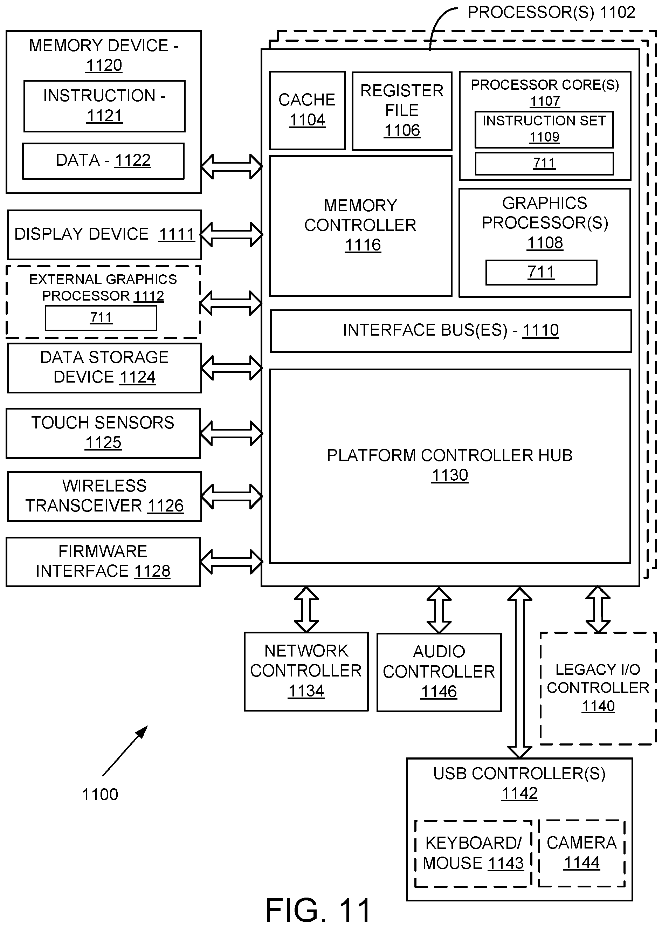

FIG. 11 is a block diagram of a processing system, according to at least one embodiment. In at least one embodiment, system 1100 includes one or more processors 1102 and one or more graphics processors 1108, and may be a single processor desktop system, a multiprocessor workstation system, or a server system having a large number of processors 1102 or processor cores 1107. In at least one embodiment, system 1100 is a processing platform incorporated within a system-on-a-chip (SoC) integrated circuit for use in mobile, handheld, or embedded devices.

In at least one embodiment, system 1100 can include, or be incorporated within a server-based gaming platform, a game console, including a game and media console, a mobile gaming console, a handheld game console, or an online game console. In at least one embodiment, system 1100 is a mobile phone, smart phone, tablet computing device or mobile Internet device. In at least one embodiment, processing system 1100 can also include, couple with, or be integrated within a wearable device, such as a smart watch wearable device, smart eyewear device, augmented reality device, or virtual reality device. In at least one embodiment, processing system 1100 is a television or set top box device having one or more processors 1102 and a graphical interface generated by one or more graphics processors 1108.

In at least one embodiment, one or more processors 1102 each include one or more processor cores 1107 to process instructions which, when executed, perform operations for system and user software. In at least one embodiment, each of one or more processor cores 1107 is configured to process a specific instruction set 1109. In at least one embodiment, instruction set 1109 may facilitate Complex Instruction Set Computing (CISC), Reduced Instruction Set Computing (RISC), or computing via a Very Long Instruction Word (VLIW). In at least one embodiment, processor cores 1107 may each process a different instruction set 1109, which may include instructions to facilitate emulation of other instruction sets. In at least one embodiment, processor core 1107 may also include other processing devices, such a Digital Signal Processor (DSP).

In at least one embodiment, processor 1102 includes cache memory 1104. In at least one embodiment, processor 1102 can have a single internal cache or multiple levels of internal cache. In at least one embodiment, cache memory is shared among various components of processor 1102. In at least one embodiment, processor 1102 also uses an external cache (e.g., a Level-3 (L3) cache or Last Level Cache (LLC)) (not shown), which may be shared among processor cores 1107 using known cache coherency techniques. In at least one embodiment, register file 1106 is additionally included in processor 1102 which may include different types of registers for storing different types of data (e.g., integer registers, floating point registers, status registers, and an instruction pointer register). In at least one embodiment, register file 1106 may include general-purpose registers or other registers.

In at least one embodiment, one or more processor(s) 1102 are coupled with one or more interface bus(es) 1110 to transmit communication signals such as address, data, or control signals between processor 1102 and other components in system 1100. In at least one embodiment, interface bus 1110, in one embodiment, can be a processor bus, such as a version of a Direct Media Interface (DMI) bus. In at least one embodiment, interface 1110 is not limited to a DMI bus, and may include one or more Peripheral Component Interconnect buses (e.g., PCI, PCI Express), memory busses, or other types of interface busses. In at least one embodiment processor(s) 1102 include an integrated memory controller 1116 and a platform controller hub 1130. In at least one embodiment, memory controller 1116 facilitates communication between a memory device and other components of system 1100, while platform controller hub (PCH) 1130 provides connections to I/O devices via a local I/O bus.

In at least one embodiment, memory device 1120 can be a dynamic random access memory (DRAM) device, a static random access memory (SRAM) device, flash memory device, phase-change memory device, or some other memory device having suitable performance to serve as process memory. In at least one embodiment memory device 1120 can operate as system memory for system 1100, to store data 1122 and instructions 1121 for use when one or more processors 1102 executes an application or process. In at least one embodiment, memory controller 1116 also couples with an optional external graphics processor 1112, which may communicate with one or more graphics processors 1108 in processors 1102 to perform graphics and media operations. In at least one embodiment, a display device 1111 can connect to processor(s) 1102. In at least one embodiment display device 1111 can include one or more of an internal display device, as in a mobile electronic device or a laptop device or an external display device attached via a display interface (e.g., DisplayPort, etc.). In at least one embodiment, display device 1111 can include a head mounted display (HMD) such as a stereoscopic display device for use in virtual reality (VR) applications or augmented reality (AR) applications.

In at least one embodiment, platform controller hub 1130 enables peripherals to connect to memory device 1120 and processor 1102 via a high-speed I/O bus. In at least one embodiment, I/O peripherals include, but are not limited to, an audio controller 1146, a network controller 1134, a firmware interface 1128, a wireless transceiver 1126, touch sensors 1125, a data storage device 1124 (e.g., hard disk drive, flash memory, etc.). In at least one embodiment, data storage device 1124 can connect via a storage interface (e.g., SATA) or via a peripheral bus, such as a Peripheral Component Interconnect bus (e.g., PCI, PCI Express). In at least one embodiment, touch sensors 1125 can include touch screen sensors, pressure sensors, or fingerprint sensors. In at least one embodiment, wireless transceiver 1126 can be a Wi-Fi transceiver, a Bluetooth transceiver, or a mobile network transceiver such as a 3G, 4G, or Long Term Evolution (LTE) transceiver. In at least one embodiment, firmware interface 1128 enables communication with system firmware, and can be, for example, a unified extensible firmware interface (UEFI). In at least one embodiment, network controller 1134 can enable a network connection to a wired network. In at least one embodiment, a high-performance network controller (not shown) couples with interface bus 1110. In at least one embodiment, audio controller 1146 is a multi-channel high definition audio controller. In at least one embodiment, system 1100 includes an optional legacy I/O controller 1140 for coupling legacy (e.g., Personal System 2 (PS/2)) devices to system. In at least one embodiment, platform controller hub 1130 can also connect to one or more Universal Serial Bus (USB) controllers 1142 connect input devices, such as keyboard and mouse 1143 combinations, a camera 1144, or other USB input devices.

In at least one embodiment, an instance of memory controller 1116 and platform controller hub 1130 may be integrated into a discreet external graphics processor, such as external graphics processor 1112. In at least one embodiment, platform controller hub 1130 and/or memory controller 1116 may be external to one or more processor(s) 1102. For example, in at least one embodiment, system 1100 can include an external memory controller 1116 and platform controller hub 1130, which may be configured as a memory controller hub and peripheral controller hub within a system chipset that is in communication with processor(s) 1102.

Inference and/or training logic 715 are used to perform inferencing and/or training operations associated with one or more embodiments. Details regarding inference and/or training logic 715 are provided below in conjunction with FIGS. 7A and/or 7B. In at least one embodiment portions or all of inference and/or training logic 715 may be incorporated into graphics processor 1500. For example, in at least one embodiment, training and/or inferencing techniques described herein may use one or more of ALUs embodied in a graphics processor. Moreover, in at least one embodiment, inferencing and/or training operations described herein may be done using logic other than logic illustrated in FIGS. 7A or 7B. In at least one embodiment, weight parameters may be stored in on-chip or off-chip memory and/or registers (shown or not shown) that configure ALUs of a graphics processor to perform one or more machine learning algorithms, neural network architectures, use cases, or training techniques described herein.

Such components can be used to perform a live updating of machine learning models, for applications running at locations such as a network edge. This updating can be performed without any, or any significant, downtime of the application in switching to a different model version.

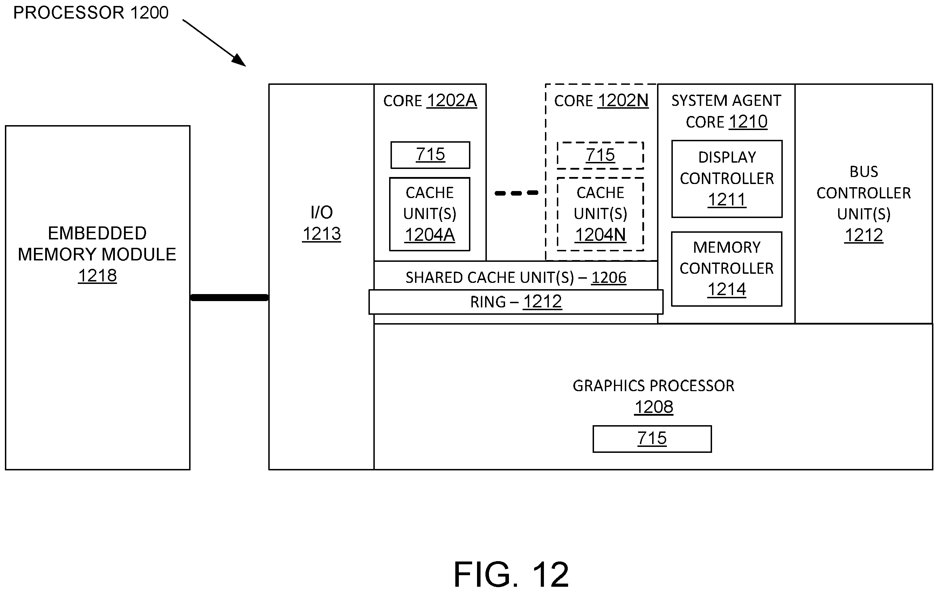

FIG. 12 is a block diagram of a processor 1200 having one or more processor cores 1202A-1202N, an integrated memory controller 1214, and an integrated graphics processor 1208, according to at least one embodiment. In at least one embodiment, processor 1200 can include additional cores up to and including additional core 1202N represented by dashed lined boxes. In at least one embodiment, each of processor cores 1202A-1202N includes one or more internal cache units 1204A-1204N. In at least one embodiment, each processor core also has access to one or more shared cached units 1206.

In at least one embodiment, internal cache units 1204A-1204N and shared cache units 1206 represent a cache memory hierarchy within processor 1200. In at least one embodiment, cache memory units 1204A-1204N may include at least one level of instruction and data cache within each processor core and one or more levels of shared mid-level cache, such as a Level 2 (L2), Level 3 (L3), Level 4 (L4), or other levels of cache, where a highest level of cache before external memory is classified as an LLC. In at least one embodiment, cache coherency logic maintains coherency between various cache units 1206 and 1204A-1204N.

In at least one embodiment, processor 1200 may also include a set of one or more bus controller units 1216 and a system agent core 1210. In at least one embodiment, one or more bus controller units 1216 manage a set of peripheral buses, such as one or more PCI or PCI express busses. In at least one embodiment, system agent core 1210 provides management functionality for various processor components. In at least one embodiment, system agent core 1210 includes one or more integrated memory controllers 1214 to manage access to various external memory devices (not shown).

In at least one embodiment, one or more of processor cores 1202A-1202N include support for simultaneous multi-threading. In at least one embodiment, system agent core 1210 includes components for coordinating and operating cores 1202A-1202N during multi-threaded processing. In at least one embodiment, system agent core 1210 may additionally include a power control unit (PCU), which includes logic and components to regulate one or more power states of processor cores 1202A-1202N and graphics processor 1208.

In at least one embodiment, processor 1200 additionally includes graphics processor 1208 to execute graphics processing operations. In at least one embodiment, graphics processor 1208 couples with shared cache units 1206, and system agent core 1210, including one or more integrated memory controllers 1214. In at least one embodiment, system agent core 1210 also includes a display controller 1211 to drive graphics processor output to one or more coupled displays. In at least one embodiment, display controller 1211 may also be a separate module coupled with graphics processor 1208 via at least one interconnect, or may be integrated within graphics processor 1208.

In at least one embodiment, a ring based interconnect unit 1212 is used to couple internal components of processor 1200. In at least one embodiment, an alternative interconnect unit may be used, such as a point-to-point interconnect, a switched interconnect, or other techniques. In at least one embodiment, graphics processor 1208 couples with ring interconnect 1212 via an I/O link 1213.

In at least one embodiment, I/O link 1213 represents at least one of multiple varieties of I/O interconnects, including an on package I/O interconnect which facilitates communication between various processor components and a high-performance embedded memory module 1218, such as an eDRAM module. In at least one embodiment, each of processor cores 1202A-1202N and graphics processor 1208 use embedded memory modules 1218 as a shared Last Level Cache.

In at least one embodiment, processor cores 1202A-1202N are homogenous cores executing a common instruction set architecture. In at least one embodiment, processor cores 1202A-1202N are heterogeneous in terms of instruction set architecture (ISA), where one or more of processor cores 1202A-1202N execute a common instruction set, while one or more other cores of processor cores 1202A-1202N executes a subset of a common instruction set or a different instruction set. In at least one embodiment, processor cores 1202A-1202N are heterogeneous in terms of microarchitecture, where one or more cores having a relatively higher power consumption couple with one or more power cores having a lower power consumption. In at least one embodiment, processor 1200 can be implemented on one or more chips or as an SoC integrated circuit.

Inference and/or training logic 715 are used to perform inferencing and/or training operations associated with one or more embodiments. Details regarding inference and/or training logic 715 are provided below in conjunction with FIGs. 7a and/or 7b. In at least one embodiment portions or all of inference and/or training logic 715 may be incorporated into processor 1200. For example, in at least one embodiment, training and/or inferencing techniques described herein may use one or more of ALUs embodied in graphics processor 1512, graphics core(s) 1202A-1202N, or other components in FIG. 12. Moreover, in at least one embodiment, inferencing and/or training operations described herein may be done using logic other than logic illustrated in FIGS. 7A or 7B. In at least one embodiment, weight parameters may be stored in on-chip or off-chip memory and/or registers (shown or not shown) that configure ALUs of graphics processor 1200 to perform one or more machine learning algorithms, neural network architectures, use cases, or training techniques described herein.

Such components can be used to perform a live updating of machine learning models, for applications running at locations such as a network edge. This updating can be performed without any, or any significant, downtime of the application in switching to a different model version.

### VIRTUALIZED COMPUTING PLATFORM

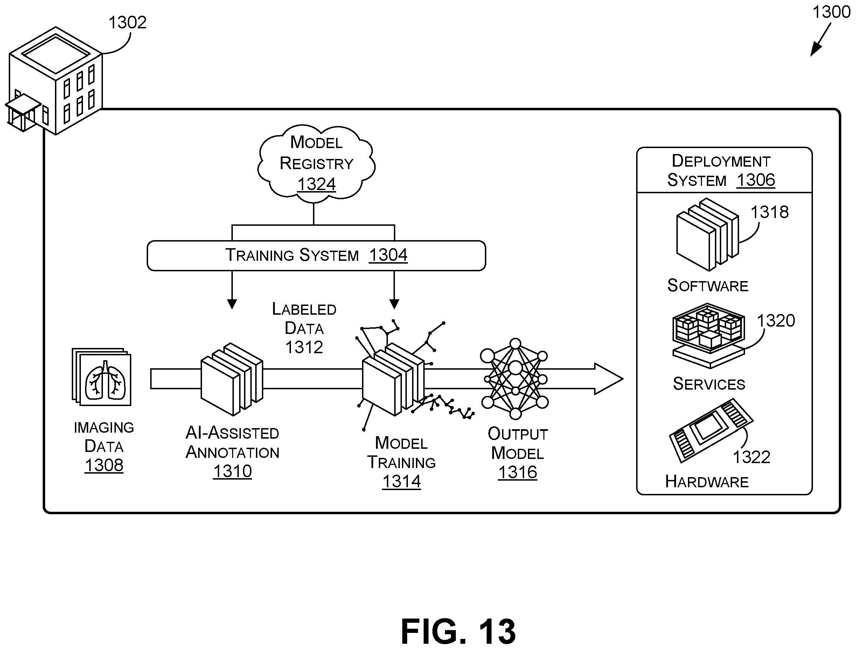

FIG. 13 is an example data flow diagram for a process 1300 of generating and deploying an image processing and inferencing pipeline, in accordance with at least one embodiment. In at least one embodiment, process 1300 may be deployed for use with imaging devices, processing devices, and/or other device types at one or more facilities 1302. Process 1300 may be executed within a training system 1304 and/or a deployment system 1306. In at least one embodiment, training system 1304 may be used to perform training, deployment, and implementation of machine learning models (e.g., neural networks, object detection algorithms, computer vision algorithms, etc.) for use in deployment system 1306. In at least one embodiment, deployment system 1306 may be configured to offload processing and compute resources among a distributed computing environment to reduce infrastructure requirements at facility 1302. In at least one embodiment, one or more applications in a pipeline may use or call upon services (e.g., inference, visualization, compute, AI, etc.) of deployment system 1306 during execution of applications.

In at least one embodiment, some of applications used in advanced processing and inferencing pipelines may use machine learning models or other AI to perform one or more processing steps. In at least one embodiment, machine learning models may be trained at facility 1302 using data 1308 (such as imaging data) generated at facility 1302 (and stored on one or more picture archiving and communication system (PACS) servers at facility 1302), may be trained using imaging or sequencing data 1308 from another facility(ies), or a combination thereof. In at least one embodiment, training system 1304 may be used to provide applications, services, and/or other resources for generating working, deployable machine learning models for deployment system 1306.

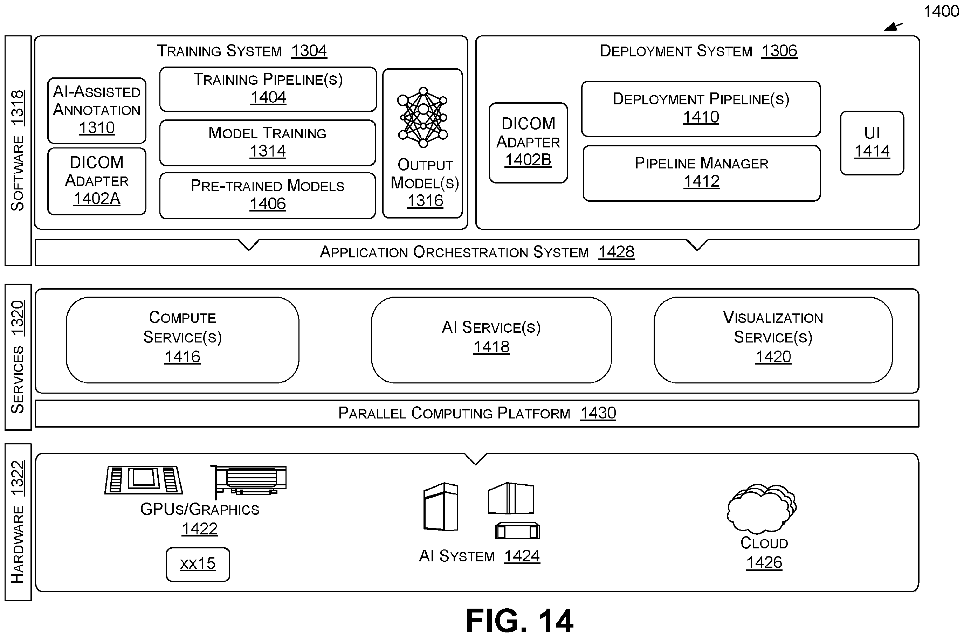

In at least one embodiment, model registry 1324 may be backed by object storage that may support versioning and object metadata. In at least one embodiment, object storage may be accessible through, for example, a cloud storage (e.g., cloud 1426 of FIG. 14) compatible application programming interface (API) from within a cloud platform. In at least one embodiment, machine learning models within model registry 1324 may uploaded, listed, modified, or deleted by developers or partners of a system interacting with an API. In at least one embodiment, an API may provide access to methods that allow users with appropriate credentials to associate models with applications, such that models may be executed as part of execution of containerized instantiations of applications.

In at least one embodiment, training pipeline 1404 (FIG. 14) may include a scenario where facility 1302 is training their own machine learning model, or has an existing machine learning model that needs to be optimized or updated. In at least one embodiment, imaging data 1308 generated by imaging device(s), sequencing devices, and/or other device types may be received. In at least one embodiment, once imaging data 1308 is received, AI-assisted annotation 1310 may be used to aid in generating annotations corresponding to imaging data 1308 to be used as ground truth data for a machine learning model. In at least one embodiment, AI-assisted annotation 1310 may include one or more machine learning models (e.g., convolutional neural networks (CNNs)) that may be trained to generate annotations corresponding to certain types of imaging data 1308 (e.g., from certain devices). In at least one embodiment, AI-assisted annotations 1310 may then be used directly, or may be adjusted or fine-tuned using an annotation tool to generate ground truth data. In at least one embodiment, AI-assisted annotations 1310, labeled clinic data 1312, or a combination thereof may be used as ground truth data for training a machine learning model. In at least one embodiment, a trained machine learning model may be referred to as output model 1316, and may be used by deployment system 1306, as described herein.

In at least one embodiment, training pipeline 1404 (FIG. 14) may include a scenario where facility 1302 needs a machine learning model for use in performing one or more processing tasks for one or more applications in deployment system 1306, but facility 1302 may not currently have such a machine learning model (or may not have a model that is optimized, efficient, or effective for such purposes). In at least one embodiment, an existing machine learning model may be selected from a model registry 1324. In at least one embodiment, model registry 1324 may include machine learning models trained to perform a variety of different inference tasks on imaging data. In at least one embodiment, machine learning models in model registry 1324 may have been trained on imaging data from different facilities than facility 1302 (e.g., facilities remotely located). In at least one embodiment, machine learning models may have been trained on imaging data from one location, two locations, or any number of locations. In at least one embodiment, when being trained on imaging data from a specific location, training may take place at that location, or at least in a manner that protects confidentiality of imaging data or restricts imaging data from being transferred off-premises. In at least one embodiment, once a model is trained - or partially trained - at one location, a machine learning model may be added to model registry 1324. In at least one embodiment, a machine learning model may then be retrained, or updated, at any number of other facilities, and a retrained or updated model may be made available in model registry 1324. In at least one embodiment, a machine learning model may then be selected from model registry 1324 - and referred to as output model 1316 - and may be used in deployment system 1306 to perform one or more processing tasks for one or more applications of a deployment system.

In at least one embodiment, training pipeline 1404 (FIG. 14), a scenario may include facility 1302 requiring a machine learning model for use in performing one or more processing tasks for one or more applications in deployment system 1306, but facility 1302 may not currently have such a machine learning model (or may not have a model that is optimized, efficient, or effective for such purposes). In at least one embodiment, a machine learning model selected from model registry 1324 may not be fine-tuned or optimized for imaging data 1308 generated at facility 1302 because of differences in populations, robustness of training data used to train a machine learning model, diversity in anomalies of training data, and/or other issues with training data. In at least one embodiment, AI-assisted annotation 1310 may be used to aid in generating annotations corresponding to imaging data 1308 to be used as ground truth data for retraining or updating a machine learning model. In at least one embodiment, labeled data 1312 may be used as ground truth data for training a machine learning model. In at least one embodiment, retraining or updating a machine learning model may be referred to as model training 1314. In at least one embodiment, model training 1314 - e.g., AI-assisted annotations 1310, labeled clinic data 1312, or a combination thereof - may be used as ground truth data for retraining or updating a machine learning model. In at least one embodiment, a trained machine learning model may be referred to as output model 1316, and may be used by deployment system 1306, as described herein.

In at least one embodiment, deployment system 1306 may include software 1318, services 1320, hardware 1322, and/or other components, features, and functionality. In at least one embodiment, deployment system 1306 may include a software "stack," such that software 1318 may be built on top of services 1320 and may use services 1320 to perform some or all of processing tasks, and services 1320 and software 1318 may be built on top of hardware 1322 and use hardware 1322 to execute processing, storage, and/or other compute tasks of deployment system 1306. In at least one embodiment, software 1318 may include any number of different containers, where each container may execute an instantiation of an application. In at least one embodiment, each application may perform one or more processing tasks in an advanced processing and inferencing pipeline (e.g., inferencing, object detection, feature detection, segmentation, image enhancement, calibration, etc.). In at least one embodiment, an advanced processing and inferencing pipeline may be defined based on selections of different containers that are desired or required for processing imaging data 1308, in addition to containers that receive and configure imaging data for use by each container and/or for use by facility 1302 after processing through a pipeline (e.g., to convert outputs back to a usable data type). In at least one embodiment, a combination of containers within software 1318 (e.g., that make up a pipeline) may be referred to as a virtual instrument (as described in more detail herein), and a virtual instrument may leverage services 1320 and hardware 1322 to execute some or all processing tasks of applications instantiated in containers.

In at least one embodiment, a data processing pipeline may receive input data (e.g., imaging data 1308) in a specific format in response to an inference request (e.g., a request from a user of deployment system 1306). In at least one embodiment, input data may be representative of one or more images, video, and/or other data representations generated by one or more imaging devices. In at least one embodiment, data may undergo pre-processing as part of data processing pipeline to prepare data for processing by one or more applications. In at least one embodiment, post-processing may be performed on an output of one or more inferencing tasks or other processing tasks of a pipeline to prepare an output data for a next application and/or to prepare output data for transmission and/or use by a user (e.g., as a response to an inference request). In at least one embodiment, inferencing tasks may be performed by one or more machine learning models, such as trained or deployed neural networks, which may include output models 1316 of training system 1304.

In at least one embodiment, tasks of data processing pipeline may be encapsulated in a container(s) that each represents a discrete, fully functional instantiation of an application and virtualized computing environment that is able to reference machine learning models. In at least one embodiment, containers or applications may be published into a private (e.g., limited access) area of a container registry (described in more detail herein), and trained or deployed models may be stored in model registry 1324 and associated with one or more applications. In at least one embodiment, images of applications (e.g., container images) may be available in a container registry, and once selected by a user from a container registry for deployment in a pipeline, an image may be used to generate a container for an instantiation of an application for use by a user's system.

In at least one embodiment, developers (e.g., software developers, clinicians, doctors, etc.) may develop, publish, and store applications (e.g., as containers) for performing image processing and/or inferencing on supplied data. In at least one embodiment, development, publishing, and/or storing may be performed using a software development kit (SDK) associated with a system (e.g., to ensure that an application and/or container developed is compliant with or compatible with a system). In at least one embodiment, an application that is developed may be tested locally (e.g., at a first facility, on data from a first facility) with an SDK which may support at least some of services 1320 as a system (e.g., system 1400 of FIG. 14). In at least one embodiment, because DICOM objects may contain anywhere from one to hundreds of images or other data types, and due to a variation in data, a developer may be responsible for managing (e.g., setting constructs for, building pre-processing into an application, etc.) extraction and preparation of incoming data. In at least one embodiment, once validated by system 1400 (e.g., for accuracy), an application may be available in a container registry for selection and/or implementation by a user to perform one or more processing tasks with respect to data at a facility (e.g., a second facility) of a user.

In at least one embodiment, developers may then share applications or containers through a network for access and use by users of a system (e.g., system 1400 of FIG. 14). In at least one embodiment, completed and validated applications or containers may be stored in a container registry and associated machine learning models may be stored in model registry 1324. In at least one embodiment, a requesting entity - who provides an inference or image processing request - may browse a container registry and/or model registry 1324 for an application, container, dataset, machine learning model, etc., select a desired combination of elements for inclusion in data processing pipeline, and submit an imaging processing request. In at least one embodiment, a request may include input data (and associated patient data, in some examples) that is necessary to perform a request, and/or may include a selection of application(s) and/or machine learning models to be executed in processing a request. In at least one embodiment, a request may then be passed to one or more components of deployment system 1306 (e.g., a cloud) to perform processing of data processing pipeline. In at least one embodiment, processing by deployment system 1306 may include referencing selected elements (e.g., applications, containers, models, etc.) from a container registry and/or model registry 1324. In at least one embodiment, once results are generated by a pipeline, results may be returned to a user for reference (e.g., for viewing in a viewing application suite executing on a local, on-premises workstation or terminal).

In at least one embodiment, to aid in processing or execution of applications or containers in pipelines, services 1320 may be leveraged. In at least one embodiment, services 1320 may include compute services, artificial intelligence (AI) services, visualization services, and/or other service types. In at least one embodiment, services 1320 may provide functionality that is common to one or more applications in software 1318, so functionality may be abstracted to a service that may be called upon or leveraged by applications. In at least one embodiment, functionality provided by services 1320 may run dynamically and more efficiently, while also scaling well by allowing applications to process data in parallel (e.g., using a parallel computing platform 1430 (FIG. 14)). In at least one embodiment, rather than each application that shares a same functionality offered by a service 1320 being required to have a respective instance of service 1320, service 1320 may be shared between and among various applications. In at least one embodiment, services may include an inference server or engine that may be used for executing detection or segmentation tasks, as non-limiting examples. In at least one embodiment, a model training service may be included that may provide machine learning model training and/or retraining capabilities. In at least one embodiment, a data augmentation service may further be included that may provide GPU accelerated data (e.g., DICOM, RIS, CIS, REST compliant, RPC, raw, etc.) extraction, resizing, scaling, and/or other augmentation. In at least one embodiment, a visualization service may be used that may add image rendering effects - such as ray-tracing, rasterization, denoising, sharpening, etc. - to add realism to two-dimensional (2D) and/or three-dimensional (3D) models. In at least one embodiment, virtual instrument services may be included that provide for beam-forming, segmentation, inferencing, imaging, and/or support for other applications within pipelines of virtual instruments.

In at least one embodiment, where a service 1320 includes an AI service (e.g., an inference service), one or more machine learning models may be executed by calling upon (e.g., as an API call) an inference service (e.g., an inference server) to execute machine learning model(s), or processing thereof, as part of application execution. In at least one embodiment, where another application includes one or more machine learning models for segmentation tasks, an application may call upon an inference service to execute machine learning models for performing one or more of processing operations associated with segmentation tasks. In at least one embodiment, software 1318 implementing advanced processing and inferencing pipeline that includes segmentation application and anomaly detection application may be streamlined because each application may call upon a same inference service to perform one or more inferencing tasks.

In at least one embodiment, hardware 1322 may include GPUs, CPUs, graphics cards, an AI/deep learning system (e.g., an AI supercomputer, such as NVIDIA's DGX), a cloud platform, or a combination thereof. In at least one embodiment, different types of hardware 1322 may be used to provide efficient, purpose-built support for software 1318 and services 1320 in deployment system 1306. In at least one embodiment, use of GPU processing may be implemented for processing locally (e.g., at facility 1302), within an AI/deep learning system, in a cloud system, and/or in other processing components of deployment system 1306 to improve efficiency, accuracy, and efficacy of image processing and generation. In at least one embodiment, software 1318 and/or services 1320 may be optimized for GPU processing with respect to deep learning, machine learning, and/or high-performance computing, as non-limiting examples. In at least one embodiment, at least some of computing environment of deployment system 1306 and/or training system 1304 may be executed in a datacenter one or more supercomputers or high performance computing systems, with GPU optimized software (e.g., hardware and software combination of NVIDIA's DGX System). In at least one embodiment, hardware 1322 may include any number of GPUs that may be called upon to perform processing of data in parallel, as described herein. In at least one embodiment, cloud platform may further include GPU processing for GPU-optimized execution of deep learning tasks, machine learning tasks, or other computing tasks. In at least one embodiment, cloud platform (e.g., NVIDIA's NGC) may be executed using an Al/deep learning supercomputer(s) and/or GPU-optimized software (e.g., as provided on NVIDIA's DGX Systems) as a hardware abstraction and scaling platform. In at least one embodiment, cloud platform may integrate an application container clustering system or orchestration system (e.g., KUBERNETES) on multiple GPUs to enable seamless scaling and load balancing.

FIG. 14 is a system diagram for an example system 1400 for generating and deploying an imaging deployment pipeline, in accordance with at least one embodiment. In at least one embodiment, system 1400 may be used to implement process 1300 of FIG. 13 and/or other processes including advanced processing and inferencing pipelines. In at least one embodiment, system 1400 may include training system 1304 and deployment system 1306. In at least one embodiment, training system 1304 and deployment system 1306 may be implemented using software 1318, services 1320, and/or hardware 1322, as described herein.

In at least one embodiment, system 1400 (e.g., training system 1304 and/or deployment system 1306) may implemented in a cloud computing environment (e.g., using cloud 1426). In at least one embodiment, system 1400 may be implemented locally with respect to a healthcare services facility, or as a combination of both cloud and local computing resources. In at least one embodiment, access to APIs in cloud 1426 may be restricted to authorized users through enacted security measures or protocols. In at least one embodiment, a security protocol may include web tokens that may be signed by an authentication (e.g., AuthN, AuthZ, Gluecon, etc.) service and may carry appropriate authorization. In at least one embodiment, APIs of virtual instruments (described herein), or other instantiations of system 1400, may be restricted to a set of public IPs that have been vetted or authorized for interaction.

In at least one embodiment, various components of system 1400 may communicate between and among one another using any of a variety of different network types, including but not limited to local area networks (LANs) and/or wide area networks (WANs) via wired and/or wireless communication protocols. In at least one embodiment, communication between facilities and components of system 1400 (e.g., for transmitting inference requests, for receiving results of inference requests, etc.) may be communicated over data bus(ses), wireless data protocols (Wi-Fi), wired data protocols (e.g., Ethernet), etc.

In at least one embodiment, training system 1304 may execute training pipelines 1404, similar to those described herein with respect to FIG. 13. In at least one embodiment, where one or more machine learning models are to be used in deployment pipelines 1410 by deployment system 1306, training pipelines 1404 may be used to train or retrain one or more (e.g. pre-trained) models, and/or implement one or more of pre-trained models 1406 (e.g., without a need for retraining or updating). In at least one embodiment, as a result of training pipelines 1404, output model(s) 1316 may be generated. In at least one embodiment, training pipelines 1404 may include any number of processing steps, such as but not limited to imaging data (or other input data) conversion or adaption In at least one embodiment, for different machine learning models used by deployment system 1306, different training pipelines 1404 may be used. In at least one embodiment, training pipeline 1404 similar to a first example described with respect to FIG. 13 may be used for a first machine learning model, training pipeline 1404 similar to a second example described with respect to FIG. 13 may be used for a second machine learning model, and training pipeline 1404 similar to a third example described with respect to FIG. 13 may be used for a third machine learning model. In at least one embodiment, any combination of tasks within training system 1304 may be used depending on what is required for each respective machine learning model. In at least one embodiment, one or more of machine learning models may already be trained and ready for deployment so machine learning models may not undergo any processing by training system 1304, and may be implemented by deployment system 1306.

In at least one embodiment, output model(s) 1316 and/or pre-trained model(s) 1406 may include any types of machine learning models depending on implementation or embodiment. In at least one embodiment, and without limitation, machine learning models used by system 1400 may include machine learning model(s) using linear regression, logistic regression, decision trees, support vector machines (SVM), Naive Bayes, k-nearest neighbor (Knn), K means clustering, random forest, dimensionality reduction algorithms, gradient boosting algorithms, neural networks (e.g., auto-encoders, convolutional, recurrent, perceptrons, Long/Short Term Memory (LSTM), Hopfield, Boltzmann, deep belief, deconvolutional, generative adversarial, liquid state machine, etc.), and/or other types of machine learning models.

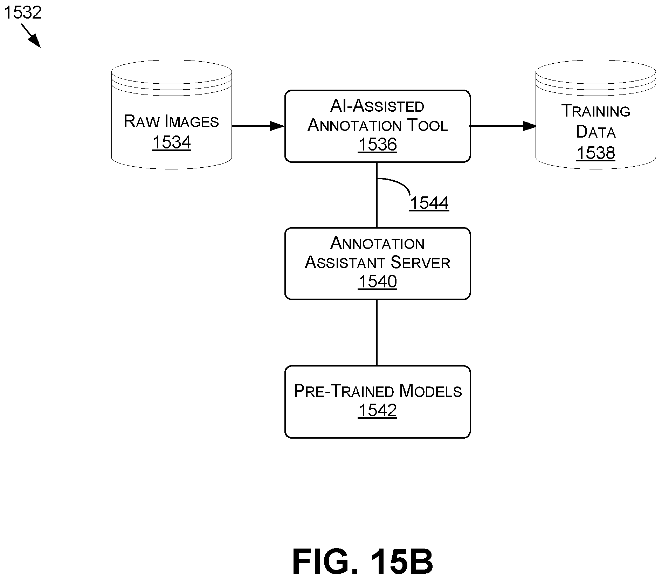

In at least one embodiment, training pipelines 1404 may include AI-assisted annotation, as described in more detail herein with respect to at least FIG. 15B. In at least one embodiment, labeled data 1312 (e.g., traditional annotation) may be generated by any number of techniques. In at least one embodiment, labels or other annotations may be generated within a drawing program (e.g., an annotation program), a computer aided design (CAD) program, a labeling program, another type of program suitable for generating annotations or labels for ground truth, and/or may be hand drawn, in some examples. In at least one embodiment, ground truth data may be synthetically produced (e.g., generated from computer models or renderings), real produced (e.g., designed and produced from real-world data), machine-automated (e.g., using feature analysis and learning to extract features from data and then generate labels), human annotated (e.g., labeler, or annotation expert, defines location of labels), and/or a combination thereof. In at least one embodiment, for each instance of imaging data 1308 (or other data type used by machine learning models), there may be corresponding ground truth data generated by training system 1304. In at least one embodiment, AI-assisted annotation may be performed as part of deployment pipelines 1410; either in addition to, or in lieu of AI-assisted annotation included in training pipelines 1404. In at least one embodiment, system 1400 may include a multi-layer platform that may include a software layer (e.g., software 1318) of diagnostic applications (or other application types) that may perform one or more medical imaging and diagnostic functions. In at least one embodiment, system 1400 may be communicatively coupled to (e.g., via encrypted links) PACS server networks of one or more facilities. In at least one embodiment, system 1400 may be configured to access and referenced data from PACS servers to perform operations, such as training machine learning models, deploying machine learning models, image processing, inferencing, and/or other operations.

In at least one embodiment, a software layer may be implemented as a secure, encrypted, and/or authenticated API through which applications or containers may be invoked (e.g., called) from an external environment(s) (e.g., facility 1302). In at least one embodiment, applications may then call or execute one or more services 1320 for performing compute, AI, or visualization tasks associated with respective applications, and software 1318 and/or services 1320 may leverage hardware 1322 to perform processing tasks in an effective and efficient manner.

In at least one embodiment, deployment system 1306 may execute deployment pipelines 1410. In at least one embodiment, deployment pipelines 1410 may include any number of applications that may be sequentially, non-sequentially, or otherwise applied to imaging data (and/or other data types) generated by imaging devices, sequencing devices, genomics devices, etc. - including AI-assisted annotation, as described above. In at least one embodiment, as described herein, a deployment pipeline 1410 for an individual device may be referred to as a virtual instrument for a device (e.g., a virtual ultrasound instrument, a virtual CT scan instrument, a virtual sequencing instrument, etc.). In at least one embodiment, for a single device, there may be more than one deployment pipeline 1410 depending on information desired from data generated by a device. In at least one embodiment, where detections of anomalies are desired from an MRI machine, there may be a first deployment pipeline 1410, and where image enhancement is desired from output of an MRI machine, there may be a second deployment pipeline 1410.

In at least one embodiment, an image generation application may include a processing task that includes use of a machine learning model. In at least one embodiment, a user may desire to use their own machine learning model, or to select a machine learning model from model registry 1324. In at least one embodiment, a user may implement their own machine learning model or select a machine learning model for inclusion in an application for performing a processing task. In at least one embodiment, applications may be selectable and customizable, and by defining constructs of applications, deployment and implementation of applications for a particular user are presented as a more seamless user experience. In at least one embodiment, by leveraging other features of system 1400 - such as services 1320 and hardware 1322 - deployment pipelines 1410 may be even more user friendly, provide for easier integration, and produce more accurate, efficient, and timely results.

In at least one embodiment, deployment system 1306 may include a user interface 1414 (e.g., a graphical user interface, a web interface, etc.) that may be used to select applications for inclusion in deployment pipeline(s) 1410, arrange applications, modify or change applications or parameters or constructs thereof, use and interact with deployment pipeline(s) 1410 during set-up and/or deployment, and/or to otherwise interact with deployment system 1306. In at least one embodiment, although not illustrated with respect to training system 1304, user interface 1414 (or a different user interface) may be used for selecting models for use in deployment system 1306, for selecting models for training, or retraining, in training system 1304, and/or for otherwise interacting with training system 1304.

In at least one embodiment, pipeline manager 1412 may be used, in addition to an application orchestration system 1428, to manage interaction between applications or containers of deployment pipeline(s) 1410 and services 1320 and/or hardware 1322. In at least one embodiment, pipeline manager 1412 may be configured to facilitate interactions from application to application, from application to service 1320, and/or from application or service to hardware 1322. In at least one embodiment, although illustrated as included in software 1318, this is not intended to be limiting, and in some examples (e.g., as illustrated in FIG. 12cc) pipeline manager 1412 may be included in services 1320. In at least one embodiment, application orchestration system 1428 (e.g., Kubernetes, DOCKER, etc.) may include a container orchestration system that may group applications into containers as logical units for coordination, management, scaling, and deployment. In at least one embodiment, by associating applications from deployment pipeline(s) 1410 (e.g., a reconstruction application, a segmentation application, etc.) with individual containers, each application may execute in a self-contained environment (e.g., at a kernel level) to increase speed and efficiency.

In at least one embodiment, each application and/or container (or image thereof) may be individually developed, modified, and deployed (e.g., a first user or developer may develop, modify, and deploy a first application and a second user or developer may develop, modify, and deploy a second application separate from a first user or developer), which may allow for focus on, and attention to, a task of a single application and/or container(s) without being hindered by tasks of another application(s) or container(s). In at least one embodiment, communication, and cooperation between different containers or applications may be aided by pipeline manager 1412 and application orchestration system 1428. In at least one embodiment, so long as an expected input and/or output of each container or application is known by a system (e.g., based on constructs of applications or containers), application orchestration system 1428 and/or pipeline manager 1412 may facilitate communication among and between, and sharing of resources among and between, each of applications or containers. In at least one embodiment, because one or more of applications or containers in deployment pipeline(s) 1410 may share same services and resources, application orchestration system 1428 may orchestrate, load balance, and determine sharing of services or resources between and among various applications or containers. In at least one embodiment, a scheduler may be used to track resource requirements of applications or containers, current usage or planned usage of these resources, and resource availability. In at least one embodiment, a scheduler may thus allocate resources to different applications and distribute resources between and among applications in view of requirements and availability of a system. In some examples, a scheduler (and/or other component of application orchestration system 1428) may determine resource availability and distribution based on constraints imposed on a system (e.g., user constraints), such as quality of service (QoS), urgency of need for data outputs (e.g., to determine whether to execute real-time processing or delayed processing), etc.

In at least one embodiment, services 1320 leveraged by and shared by applications or containers in deployment system 1306 may include compute services 1416, AI services 1418, visualization services 1420, and/or other service types. In at least one embodiment, applications may call (e.g., execute) one or more of services 1320 to perform processing operations for an application. In at least one embodiment, compute services 1416 may be leveraged by applications to perform super-computing or other high-performance computing (HPC) tasks. In at least one embodiment, compute service(s) 1416 may be leveraged to perform parallel processing (e.g., using a parallel computing platform 1430) for processing data through one or more of applications and/or one or more tasks of a single application, substantially simultaneously. In at least one embodiment, parallel computing platform 1430 (e.g., NVIDIA's CUDA) may enable general purpose computing on GPUs (GPGPU) (e.g., GPUs 1422). In at least one embodiment, a software layer of parallel computing platform 1430 may provide access to virtual instruction sets and parallel computational elements of GPUs, for execution of compute kernels. In at least one embodiment, parallel computing platform 1430 may include memory and, in some embodiments, a memory may be shared between and among multiple containers, and/or between and among different processing tasks within a single container. In at least one embodiment, inter-process communication (IPC) calls may be generated for multiple containers and/or for multiple processes within a container to use same data from a shared segment of memory of parallel computing platform 1430 (e.g., where multiple different stages of an application or multiple applications are processing same information). In at least one embodiment, rather than making a copy of data and moving data to different locations in memory (e.g., a read/write operation), same data in same location of a memory may be used for any number of processing tasks (e.g., at a same time, at different times, etc.). In at least one embodiment, as data is used to generate new data as a result of processing, this information of a new location of data may be stored and shared between various applications. In at least one embodiment, location of data and a location of updated or modified data may be part of a definition of how a payload is understood within containers.

In at least one embodiment, AI services 1418 may be leveraged to perform inferencing services for executing machine learning model(s) associated with applications (e.g., tasked with performing one or more processing tasks of an application). In at least one embodiment, AI services 1418 may leverage AI system 1424 to execute machine learning model(s) (e.g., neural networks, such as CNNs) for segmentation, reconstruction, object detection, feature detection, classification, and/or other inferencing tasks. In at least one embodiment, applications of deployment pipeline(s) 1410 may use one or more of output models 1316 from training system 1304 and/or other models of applications to perform inference on imaging data. In at least one embodiment, two or more examples of inferencing using application orchestration system 1428 (e.g., a scheduler) may be available. In at least one embodiment, a first category may include a high priority/low latency path that may achieve higher service level agreements, such as for performing inference on urgent requests during an emergency, or for a radiologist during diagnosis. In at least one embodiment, a second category may include a standard priority path that may be used for requests that may be non-urgent or where analysis may be performed at a later time. In at least one embodiment, application orchestration system 1428 may distribute resources (e.g., services 1320 and/or hardware 1322) based on priority paths for different inferencing tasks of AI services 1418.

In at least one embodiment, shared storage may be mounted to AI services 1418 within system 1400. In at least one embodiment, shared storage may operate as a cache (or other storage device type) and may be used to process inference requests from applications. In at least one embodiment, when an inference request is submitted, a request may be received by a set of API instances of deployment system 1306, and one or more instances may be selected (e.g., for best fit, for load balancing, etc.) to process a request. In at least one embodiment, to process a request, a request may be entered into a database, a machine learning model may be located from model registry 1324 if not already in a cache, a validation step may ensure appropriate machine learning model is loaded into a cache (e.g., shared storage), and/or a copy of a model may be saved to a cache. In at least one embodiment, a scheduler (e.g., of pipeline manager 1412) may be used to launch an application that is referenced in a request if an application is not already running or if there are not enough instances of an application. In at least one embodiment, if an inference server is not already launched to execute a model, an inference server may be launched. Any number of inference servers may be launched per model. In at least one embodiment, in a pull model, in which inference servers are clustered, models may be cached whenever load balancing is advantageous. In at least one embodiment, inference servers may be statically loaded in corresponding, distributed servers.

In at least one embodiment, inferencing may be performed using an inference server that runs in a container. In at least one embodiment, an instance of an inference server may be associated with a model (and optionally a plurality of versions of a model). In at least one embodiment, if an instance of an inference server does not exist when a request to perform inference on a model is received, a new instance may be loaded. In at least one embodiment, when starting an inference server, a model may be passed to an inference server such that a same container may be used to serve different models so long as inference server is running as a different instance.

In at least one embodiment, during application execution, an inference request for a given application may be received, and a container (e.g., hosting an instance of an inference server) may be loaded (if not already), and a start procedure may be called. In at least one embodiment, pre-processing logic in a container may load, decode, and/or perform any additional pre-processing on incoming data (e.g., using a CPU(s) and/or GPU(s)). In at least one embodiment, once data is prepared for inference, a container may perform inference as necessary on data. In at least one embodiment, this may include a single inference call on one image (e.g., a hand X-ray), or may require inference on hundreds of images (e.g., a chest CT). In at least one embodiment, an application may summarize results before completing, which may include, without limitation, a single confidence score, pixel level-segmentation, voxel-level segmentation, generating a visualization, or generating text to summarize findings. In at least one embodiment, different models or applications may be assigned different priorities. For example, some models may have a real-time (TAT < 1 min) priority while others may have lower priority (e.g., TAT < 10 min). In at least one embodiment, model execution times may be measured from requesting institution or entity and may include partner network traversal time, as well as execution on an inference service.

In at least one embodiment, transfer of requests between services 1320 and inference applications may be hidden behind a software development kit (SDK), and robust transport may be provide through a queue. In at least one embodiment, a request will be placed in a queue via an API for an individual application/tenant ID combination and an SDK will pull a request from a queue and give a request to an application. In at least one embodiment, a name of a queue may be provided in an environment from where an SDK will pick it up. In at least one embodiment, asynchronous communication through a queue may be useful as it may allow any instance of an application to pick up work as it becomes available. Results may be transferred back through a queue, to ensure no data is lost. In at least one embodiment, queues may also provide an ability to segment work, as highest priority work may go to a queue with most instances of an application connected to it, while lowest priority work may go to a queue with a single instance connected to it that processes tasks in an order received. In at least one embodiment, an application may run on a GPU-accelerated instance generated in cloud 1426, and an inference service may perform inferencing on a GPU.

In at least one embodiment, visualization services 1420 may be leveraged to generate visualizations for viewing outputs of applications and/or deployment pipeline(s) 1410. In at least one embodiment, GPUs 1422 may be leveraged by visualization services 1420 to generate visualizations. In at least one embodiment, rendering effects, such as ray-tracing, may be implemented by visualization services 1420 to generate higher quality visualizations. In at least one embodiment, visualizations may include, without limitation, 2D image renderings, 3D volume renderings, 3D volume reconstruction, 2D tomographic slices, virtual reality displays, augmented reality displays, etc. In at least one embodiment, virtualized environments may be used to generate a virtual interactive display or environment (e.g., a virtual environment) for interaction by users of a system (e.g., doctors, nurses, radiologists, etc.). In at least one embodiment, visualization services 1420 may include an internal visualizer, cinematics, and/or other rendering or image processing capabilities or functionality (e.g., ray tracing, rasterization, internal optics, etc.).

In at least one embodiment, hardware 1322 may include GPUs 1422, AI system 1424, cloud 1426, and/or any other hardware used for executing training system 1304 and/or deployment system 1306. In at least one embodiment, GPUs 1422 (e.g., NVIDIA's TESLA and/or QUADRO GPUs) may include any number of GPUs that may be used for executing processing tasks of compute services 1416, AI services 1418, visualization services 1420, other services, and/or any of features or functionality of software 1318. For example, with respect to AI services 1418, GPUs 1422 may be used to perform pre-processing on imaging data (or other data types used by machine learning models), post-processing on outputs of machine learning models, and/or to perform inferencing (e.g., to execute machine learning models). In at least one embodiment, cloud 1426, AI system 1424, and/or other components of system 1400 may use GPUs 1422. In at least one embodiment, cloud 1426 may include a GPU-optimized platform for deep learning tasks. In at least one embodiment, AI system 1424 may use GPUs, and cloud 1426 - or at least a portion tasked with deep learning or inferencing - may be executed using one or more AI systems 1424. As such, although hardware 1322 is illustrated as discrete components, this is not intended to be limiting, and any components of hardware 1322 may be combined with, or leveraged by, any other components of hardware 1322.

In at least one embodiment, AI system 1424 may include a purpose-built computing system (e.g., a super-computer or an HPC) configured for inferencing, deep learning, machine learning, and/or other artificial intelligence tasks. In at least one embodiment, AI system 1424 (e.g., NVIDIA's DGX) may include GPU-optimized software (e.g., a software stack) that may be executed using a plurality of GPUs 1422, in addition to CPUs, RAM, storage, and/or other components, features, or functionality. In at least one embodiment, one or more AI systems 1424 may be implemented in cloud 1426 (e.g., in a data center) for performing some or all of AI-based processing tasks of system 1400.

In at least one embodiment, cloud 1426 may include a GPU-accelerated infrastructure (e.g., NVIDIA's NGC) that may provide a GPU-optimized platform for executing processing tasks of system 1400. In at least one embodiment, cloud 1426 may include an AI system(s) 1424 for performing one or more of AI-based tasks of system 1400 (e.g., as a hardware abstraction and scaling platform). In at least one embodiment, cloud 1426 may integrate with application orchestration system 1428 leveraging multiple GPUs to enable seamless scaling and load balancing between and among applications and services 1320. In at least one embodiment, cloud 1426 may tasked with executing at least some of services 1320 of system 1400, including compute services 1416, AI services 1418, and/or visualization services 1420, as described herein. In at least one embodiment, cloud 1426 may perform small and large batch inference (e.g., executing NVIDIA's TENSOR RT), provide an accelerated parallel computing API and platform 1430 (e.g., NVIDIA's CUDA), execute application orchestration system 1428 (e.g., KUBERNETES), provide a graphics rendering API and platform (e.g., for ray-tracing, 2D graphics, 3D graphics, and/or other rendering techniques to produce higher quality cinematics), and/or may provide other functionality for system 1400.

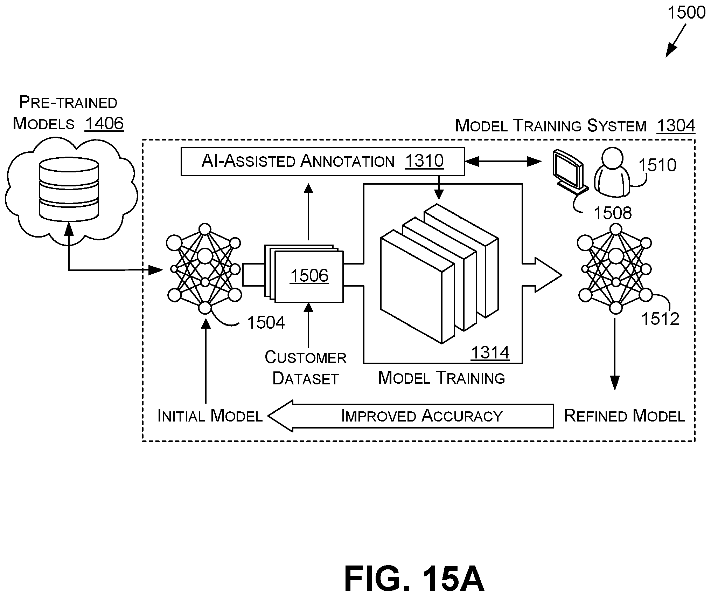

FIG. 15A illustrates a data flow diagram for a process 1500 to train, retrain, or update a machine learning model, in accordance with at least one embodiment. In at least one embodiment, process 1500 may be executed using, as a non-limiting example, system 1400 of FIG. 14. In at least one embodiment, process 1500 may leverage services 1320 and/or hardware 1322 of system 1400, as described herein. In at least one embodiment, refined models 1512 generated by process 1500 may be executed by deployment system 1306 for one or more containerized applications in deployment pipelines 1410.

In at least one embodiment, model training 1314 may include retraining or updating an initial model 1504 (e.g., a pre-trained model) using new training data (e.g., new input data, such as customer dataset 1506, and/or new ground truth data associated with input data). In at least one embodiment, to retrain, or update, initial model 1504, output or loss layer(s) of initial model 1504 may be reset, or deleted, and/or replaced with an updated or new output or loss layer(s). In at least one embodiment, initial model 1504 may have previously fine-tuned parameters (e.g., weights and/or biases) that remain from prior training, so training or retraining 1314 may not take as long or require as much processing as training a model from scratch. In at least one embodiment, during model training 1314, by having reset or replaced output or loss layer(s) of initial model 1504, parameters may be updated and re-tuned for a new data set based on loss calculations associated with accuracy of output or loss layer(s) at generating predictions on new, customer dataset 1506 (e.g., image data 1308 of FIG. 13).

In at least one embodiment, pre-trained models 1406 may be stored in a data store, or registry (e.g., model registry 1324 of FIG. 13). In at least one embodiment, pre-trained models 1406 may have been trained, at least in part, at one or more facilities other than a facility executing process 1500. In at least one embodiment, to protect privacy and rights of patients, subjects, or clients of different facilities, pre-trained models 1406 may have been trained, on-premise, using customer or patient data generated on-premise. In at least one embodiment, pre-trained models 1406 may be trained using cloud 1426 and/or other hardware 1322, but confidential, privacy protected patient data may not be transferred to, used by, or accessible to any components of cloud 1426 (or other off premise hardware). In at least one embodiment, where a pre-trained model 1406 is trained at using patient data from more than one facility, pre-trained model 1406 may have been individually trained for each facility prior to being trained on patient or customer data from another facility. In at least one embodiment, such as where a customer or patient data has been released of privacy concerns (e.g., by waiver, for experimental use, etc.), or where a customer or patient data is included in a public data set, a customer or patient data from any number of facilities may be used to train pre-trained model 1406 on-premise and/or off premise, such as in a datacenter or other cloud computing infrastructure.

In at least one embodiment, when selecting applications for use in deployment pipelines 1410, a user may also select machine learning models to be used for specific applications. In at least one embodiment, a user may not have a model for use, so a user may select a pre-trained model 1406 to use with an application. In at least one embodiment, pre-trained model 1406 may not be optimized for generating accurate results on customer dataset 1506 of a facility of a user (e.g., based on patient diversity, demographics, types of medical imaging devices used, etc.). In at least one embodiment, prior to deploying pre-trained model 1406 into deployment pipeline 1410 for use with an application(s), pre-trained model 1406 may be updated, retrained, and/or fine-tuned for use at a respective facility.

In at least one embodiment, a user may select pre-trained model 1406 that is to be updated, retrained, and/or fine-tuned, and pre-trained model 1406 may be referred to as initial model 1504 for training system 1304 within process 1500. In at least one embodiment, customer dataset 1506 (e.g., imaging data, genomics data, sequencing data, or other data types generated by devices at a facility) may be used to perform model training 1314 (which may include, without limitation, transfer learning) on initial model 1504 to generate refined model 1512. In at least one embodiment, ground truth data corresponding to customer dataset 1506 may be generated by training system 1304. In at least one embodiment, ground truth data may be generated, at least in part, by clinicians, scientists, doctors, practitioners, at a facility (e.g., as labeled clinic data 1312 of FIG. 13).

In at least one embodiment, AI-assisted annotation 1310 may be used in some examples to generate ground truth data. In at least one embodiment, AI-assisted annotation 1310 (e.g., implemented using an AI-assisted annotation SDK) may leverage machine learning models (e.g., neural networks) to generate suggested or predicted ground truth data for a customer dataset. In at least one embodiment, user 1510 may use annotation tools within a user interface (a graphical user interface (GUI)) on computing device 1508.

In at least one embodiment, user 1510 may interact with a GUI via computing device 1508 to edit or fine-tune (auto)annotations. In at least one embodiment, a polygon editing feature may be used to move vertices of a polygon to more accurate or fine-tuned locations.

In at least one embodiment, once customer dataset 1506 has associated ground truth data, ground truth data (e.g., from AI-assisted annotation, manual labeling, etc.) may be used by during model training 1314 to generate refined model 1512. In at least one embodiment, customer dataset 1506 may be applied to initial model 1504 any number of times, and ground truth data may be used to update parameters of initial model 1504 until an acceptable level of accuracy is attained for refined model 1512. In at least one embodiment, once refined model 1512 is generated, refined model 1512 may be deployed within one or more deployment pipelines 1410 at a facility for performing one or more processing tasks with respect to medical imaging data.

In at least one embodiment, refined model 1512 may be uploaded to pre-trained models 1406 in model registry 1324 to be selected by another facility. In at least one embodiment, his process may be completed at any number of facilities such that refined model 1512 may be further refined on new datasets any number of times to generate a more universal model.

FIG. 15B is an example illustration of a client-server architecture 1532 to enhance annotation tools with pre-trained annotation models, in accordance with at least one embodiment. In at least one embodiment, AI-assisted annotation tools 1536 may be instantiated based on a client-server architecture 1532. In at least one embodiment, annotation tools 1536 in imaging applications may aid radiologists, for example, identify organs and abnormalities. In at least one embodiment, imaging applications may include software tools that help user 1510 to identify, as a non-limiting example, a few extreme points on a particular organ of interest in raw images 1534 (e.g., in a 3D MRI or CT scan) and receive auto-annotated results for all 2D slices of a particular organ. In at least one embodiment, results may be stored in a data store as training data 1538 and used as (for example and without limitation) ground truth data for training. In at least one embodiment, when computing device 1508 sends extreme points for AI-assisted annotation 1310, a deep learning model, for example, may receive this data as input and return inference results of a segmented organ or abnormality. In at least one embodiment, pre-instantiated annotation tools, such as AI-Assisted Annotation Tool 1536B in FIG. 15B, may be enhanced by making API calls (e.g., API Call 1544) to a server, such as an Annotation Assistant Server 1540 that may include a set of pre-trained models 1542 stored in an annotation model registry, for example. In at least one embodiment, an annotation model registry may store pre-trained models 1542 (e.g., machine learning models, such as deep learning models) that are pre-trained to perform AI-assisted annotation on a particular organ or abnormality. These models may be further updated by using training pipelines 1404. In at least one embodiment, preinstalled annotation tools may be improved over time as new labeled clinic data 1312 is added.

Such components can be used to perform a live updating of machine learning models, for applications running at locations such as a network edge. This updating can be performed without any, or any significant, downtime of the application in switching to a different model version.

The scope of the invention is defined in the appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. Term "connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. Use of term "set" (e.g., "a set of items") or "subset," unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B, and at least one of C each to be present. In addition, unless otherwise noted or contradicted by context, term "plurality" indicates a state of being plural (e.g., "a plurality of items" indicates multiple items). A plurality is at least two items, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. A set of non-transitory computer-readable storage media, in at least one embodiment, comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. Terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. Obtaining, acquiring, receiving, or inputting analog and digital data can be accomplished in a variety of ways such as by receiving data as a parameter of a function call or a call to an application programming interface. In some implementations, process of obtaining, acquiring, receiving, or inputting analog or digital data can be accomplished by transferring data via a serial or parallel interface. In another implementation, process of obtaining, acquiring, receiving, or inputting analog or digital data can be accomplished by transferring data via a computer network from providing entity to acquiring entity. References may also be made to providing, outputting, transmitting, sending, or presenting analog or digital data. In various examples, process of providing, outputting, transmitting, sending, or presenting analog or digital data can be accomplished by transferring data as an input or output parameter of a function call, a parameter of an application programming interface or interprocess communication mechanism.

Although discussion above sets forth example implementations of described techniques, other architectures may be used to implement described functionality, and are intended to be within scope of the invention if they are encompassed by the scope of the appended claims. Furthermore, although specific distributions of responsibilities are defined above for purposes of discussion, various functions and responsibilities might be distributed and divided in different ways, to the extent encompassed by the scope of the appended claims. Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

## Claims

1. A computer-implemented method (300), comprising:
executing (302), on an edge computing device, an application with a first version of a machine learning model;
receiving (304), to the edge computing device, a second version of the machine learning model;
**characterized in that** the method (300) further comprises:
receiving (306), to the edge computing device, new configuration data for the application that specifies use of the second version; and
in response to detecting the new configuration data, causing (308) the application while executing to automatically switch to the second version of the machine learning model, wherein machine learning model versions are stored in a local storage on the edge computing device,
wherein the second version of the machine learning model is enabled to be mounted from the local storage (210) on the edge computing device into an application container (126, 220) in which the application is executing.

2. The computer-implemented method (300) of claim 1, wherein the edge computing device is a server or system on chip (SoC) located at a network edge.

3. The computer-implemented method (300) of claim 1 or 2, wherein the first version and the second version are stored in a model directory (212) of a storage volume mounted to the edge computing device.

4. The computer-implemented method (300) of any of the preceding claims, further comprising:
monitoring a model store (206) associated with the machine learning model; and
automatically fetching the second version of the machine learning model to the edge computing device in response to detecting the second version in the model store (206).

5. The computer-implemented method (300) of any of the preceding claims, further comprising:
generating a new context in response to detecting the new configuration data, wherein the application is caused to automatically switch to use of the second version further in response to the application detecting that the new context is available.

6. The computer-implemented method (300) of any of the preceding claims, wherein the application is enabled to automatically switch to use of the second version without requiring a restart of the application.

7. The computer-implemented method (300) of any of the preceding claims, wherein the application was deployed to the edge computing device as part of an application container image that did not include the first version of the machine learning model.

8. The computer-implemented method (300) of claim 7, further comprising:
deleting the first version of the machine learning model from the application container (126, 220) but retaining the first version in the local storage (210) on the edge computing device.

9. The computer-implemented method (300) of claim 8, further comprising:
receiving updated configuration data for the application that specifies use of the first version; and
in response to detecting the updated configuration data, causing the application while executing to automatically switch to the first version of the machine learning model, the first version being mounted to the application container (126, 220) from the local storage (210) on the edge computing device.

10. A system (900) in an edge computing device, the system comprising:
at least one processor (902); and
memory (920) including instructions that, when executed by the at least one processor (902), cause the system (900) to:
execute (302) an application with a first version of a machine learning model;
receive (304) a second version of the machine learning model; wherein the system further comprises a local storage;
**characterized in that** the instructions further cause the system (900) to:
store machine learning model versions in the local storage on the edge computing device; receive (306) new configuration data for the application that specifies use of the second version; and
in response to detecting the new configuration data, cause (308) the application while executing to automatically switch to the second version of the machine learning model, wherein the second version of the machine learning model is enabled to be mounted from local storage (210) on the edge computing device into an application container (126, 220) in which the application is executing.

11. The system (900) of claim 10, wherein the instructions when executed further cause the system to:
monitor a model store (206) associated with the machine learning model; and
automatically fetch the second version of the machine learning model to the computing device in response to detecting the second version in the model store (206).

12. The system (900) of claim 10 or 11, wherein the system (900) is located at a network edge, and further comprising:
local storage (210) for storing the first version and the second version in subdirectories of a model directory, wherein the application is able to automatically switch to the second version of the machine learning model once mounted into the application container (126, 220).

13. The system (900) of claim 12, wherein the application was deployed to the system (900) as part of an application container image that did not include the first version of the machine learning model.

14. The system (900) of any of claims 10 to 13, wherein the instructions when executed further cause the system (900) to:
generate a new context in response to detecting the new configuration data, wherein the application is caused to automatically switch to use of the second version further in response to the application detecting that the new context is available.

15. The system (900) of any of claims 10 to 14, wherein the application is enabled to automatically switch to use of the second version without requiring a restart of the application.

16. The computer-implemented method (300) of claim 1, comprising:
executing, in the application container (126, 220) on a network edge device, an application utilizing a first version of a machine learning model for inferencing on a data stream;
detecting a new version of the machine learning model available from a model source;
fetching the new version of the model to local storage (210) on the network edge device;
updating context information to indicate the new version of the model;
mounting the new version of the model into the application container (126, 220); and
enabling the application to automatically switch to utilizing the new version of the machine learning model without a loss of data from the data stream.

17. The computer-implemented method (300) of claim 16, wherein the first version and the new version are stored in subdirectories of a model directory of a storage volume mounted to the network edge device.

18. The computer-implemented method (300) of claim 16 or 17, wherein the application is caused to detect the updated context information and, in response, automatically switch to utilizing the second version without a restart or update of the application.

19. The computer-implemented method (300) of any of claims 16 to 18, wherein the application was deployed to the network edge device as part of an application container image that did not include the first version of the machine learning model.

20. The computer-implemented method (300) of any of claims 16 to 19, further comprising:
deleting the first version of the machine learning model from the application container (126, 220) but retaining the first version in the local storage (210) on the computing device.

## Patentansprüche

1. Computerimplementiertes Verfahren (300), umfassend:
Ausführen (302), auf einer Edge-Rechenvorrichtung, einer Anwendung mit einer ersten Version eines maschinellen Lernmodells;
Empfangen (304) einer zweiten Version des maschinellen Lernmodells an der Edge-Rechenvorrichtung;
**dadurch gekennzeichnet, dass** das Verfahren (300) weiter umfasst:
Empfangen (306), an der Edge-Rechenvorrichtung, von neuen Konfigurationsdaten für die Anwendung, die die Verwendung der zweiten Version spezifizieren; und
als Reaktion auf das Erkennen der neuen Konfigurationsdaten, Veranlassen (308) der Anwendung dazu, während der Ausführung automatisch zur zweiten Version des maschinellen Lernmodells zu wechseln,
wobei Versionen des maschinellen Lernmodells in einem lokalen Speicher auf der Edge-Rechenvorrichtung gespeichert werden,
wobei die zweite Version des maschinellen Lernmodells in die Lage versetzt wird, aus dem lokalen Speicher (210) auf der Edge-Rechenvorrichtung in einen Anwendungscontainer (126, 220), in dem die Anwendung ausgeführt wird, eingebunden zu werden.

2. Computerimplementiertes Verfahren (300) nach Anspruch 1, wobei die Edge-Rechenvorrichtung ein Server oder ein System-on-Chip (SoC) ist, der bzw. das sich an einem Netzwerk-Edge befindet.

3. Computerimplementiertes Verfahren (300) nach Anspruch 1 oder 2, wobei die erste Version und die zweite Version in einem Modellverzeichnis (212) eines Speichervolumens gespeichert werden, das in die Edge-Rechenvorrichtung eingebunden ist.

4. Computerimplementiertes Verfahren (300) nach einem der vorstehenden Ansprüche, weiter umfassend:
Überwachen eines Modellspeichers (206), der dem maschinellen Lernmodell zugeordnet ist; und
automatisches Abrufen der zweiten Version des maschinellen Lernmodells auf die Edge-Rechenvorrichtung als Reaktion auf das Erkennen der zweiten Version im Modellspeicher (206).

5. Computerimplementiertes Verfahren (300) nach einem der vorstehenden Ansprüche, weiter umfassend:
Erzeugen eines neuen Kontexts als Reaktion auf das Erkennen der neuen Konfigurationsdaten, wobei als Reaktion auf das Erkennen durch die Anwendung, dass der neue Kontext verfügbar ist, die Anwendung weiter dazu veranlasst wird, automatisch zur Verwendung der zweiten Version zu wechseln.

6. Computerimplementiertes Verfahren (300) nach einem der vorstehenden Ansprüche, wobei die Anwendung in die Lage versetzt wird, automatisch zur Verwendung der zweiten Version zu wechseln, ohne einen Neustart der Anwendung zu erfordern.

7. Computerimplementiertes Verfahren (300) nach einem der vorstehenden Ansprüche, wobei die Anwendung auf der Edge-Rechenvorrichtung als Teil eines Anwendungscontainerbildes implementiert wurde, das die erste Version des maschinellen Lernmodells nicht beinhaltete.

8. Computerimplementiertes Verfahren (300) nach Anspruch 7, weiter umfassend:
Löschen der ersten Version des maschinellen Lernmodells aus dem Anwendungscontainer (126, 220), aber Beibehalten der ersten Version im lokalen Speicher (210) auf der Edge-Rechenvorrichtung.

9. Computerimplementiertes Verfahren (300) nach Anspruch 8, weiter umfassend: Empfangen von aktualisierten Konfigurationsdaten für die Anwendung, die die Verwendung der ersten Version spezifizieren; und
als Reaktion auf das Erkennen der aktualisierten Konfigurationsdaten, Veranlassen der Anwendung dazu, während der Ausführung automatisch zur ersten Version des maschinellen Lernmodells zu wechseln, wobei die erste Version aus dem lokalen Speicher (210) auf der Edge-Rechenvorrichtung in den Anwendungscontainer (126, 220) eingebunden wird.

10. System (900) in einer Edge-Rechenvorrichtung, wobei das System Folgendes umfasst:
mindestens einen Prozessor (902); und
Speicher (920), der Anweisungen beinhaltet, die, wenn sie von dem mindestens einen Prozessor (902) ausgeführt werden, das System (900) dazu veranlassen:
eine Anwendung mit einer ersten Version eines maschinellen Lernmodells auszuführen (302);
eine zweite Version des maschinellen Lernmodells zu empfangen (304); wobei das System weiter einen lokalen Speicher umfasst;
**dadurch gekennzeichnet, dass** die Anweisungen das System (900) weiter dazu veranlassen: Versionen des maschinellen Lernmodells im lokalen Speicher auf der Edge-Rechenvorrichtung zu speichern;
neue Konfigurationsdaten für die Anwendung zu empfangen (306), die die Verwendung der zweiten Version spezifizieren; und
als Reaktion auf das Erkennen der neuen Konfigurationsdaten die Anwendung dazu zu veranlassen (308), während der Ausführung automatisch zur zweiten Version des maschinellen Lernmodells zu wechseln, wobei die zweite Version des maschinellen Lernmodells in die Lage versetzt wird, aus dem lokalen Speicher (210) auf der Edge-Rechenvorrichtung in einen Anwendungscontainer (126, 220), in dem die Anwendung ausgeführt wird, eingebunden zu werden.

11. System (900) nach Anspruch 10, wobei die Anweisungen, wenn sie ausgeführt werden, das System weiter dazu veranlassen:
einen Modellspeicher (206) zu überwachen, der dem maschinellen Lernmodell zugeordnet ist; und
als Reaktion auf das Erkennen der zweiten Version im Modellspeicher (206) die zweite Version des maschinellen Lernmodells automatisch auf die Rechenvorrichtung abzurufen.

12. System (900) nach Anspruch 10 oder 11, wobei sich das System (900) an einem Netzwerk-Edge befindet und weiter Folgendes umfasst:
lokalen Speicher (210) zum Speichern der ersten Version und der zweiten Version in Unterverzeichnissen eines Modellverzeichnisses, wobei die Anwendung in der Lage ist, automatisch zur zweiten Version des maschinellen Lernmodells zu wechseln, sobald diese in den Anwendungscontainer (126, 220) eingebunden ist.

13. System (900) nach Anspruch 12, wobei die Anwendung auf dem System (900) als Teil eines Anwendungscontainerbildes implementiert wurde, das die erste Version des maschinellen Lernmodells nicht beinhaltete.

14. System (900) nach einem der Ansprüche 10 bis 13, wobei die Anweisungen, wenn sie ausgeführt werden, das System (900) weiter dazu veranlassen:
als Reaktion auf das Erkennen der neuen Konfigurationsdaten einen neuen Kontext zu erzeugen, wobei als Reaktion auf das Erkennen durch die Anwendung, dass der neue Kontext verfügbar ist, die Anwendung weiter dazu veranlasst wird, automatisch zur Verwendung der zweiten Version zu wechseln.

15. System (900) nach einem der Ansprüche 10 bis 14, wobei die Anwendung in die Lage versetzt wird, automatisch zur Verwendung der zweiten Version zu wechseln, ohne einen Neustart der Anwendung zu erfordern.

16. Computerimplementiertes Verfahren (300) nach Anspruch 1, umfassend:
Ausführen einer Anwendung im Anwendungscontainer (126, 220) auf einer Netzwerk-Edge-Vorrichtung unter Verwendung einer ersten Version eines maschinellen Lernmodells, um Rückschlüsse auf einen Datenstrom zu ziehen;
Erkennen einer neuen Version des maschinellen Lernmodells, die aus einer Modellquelle verfügbar ist;
Abrufen der neuen Version des Modells in lokalen Speicher (210) auf der Netzwerk-Edge-Vorrichtung;
Aktualisieren von Kontextinformationen, um die neue Version des Modells anzugeben;
Einbinden der neuen Version des Modells in den Anwendungscontainer (126, 220); und
Versetzen der Anwendung in die Lage, ohne einen Verlust von Daten aus dem Datenstrom automatisch zur Verwendung der neuen Version des maschinellen Lernmodells zu wechseln.

17. Computerimplementiertes Verfahren (300) nach Anspruch 16, wobei die erste Version und die neue Version in Unterverzeichnissen eines Modellverzeichnisses eines Speichervolumens gespeichert werden, das in die Netzwerk-Edge-Vorrichtung eingebunden ist.

18. Computerimplementiertes Verfahren (300) nach Anspruch 16 oder 17, wobei die Anwendung dazu veranlasst wird, die aktualisierten Kontextinformationen zu erkennen und als Reaktion darauf ohne einen Neustart oder eine Aktualisierung der Anwendung automatisch zur Verwendung der zweiten Version zu wechseln.

19. Computerimplementiertes Verfahren (300) nach einem der Ansprüche 16 bis 18, wobei die Anwendung auf der Netzwerk-Edge-Vorrichtung als Teil eines Anwendungscontainerbildes implementiert wurde, das die erste Version des maschinellen Lernmodells nicht beinhaltete.

20. Computerimplementiertes Verfahren (300) nach einem der Ansprüche 16 bis 19, weiter umfassend:
Löschen der ersten Version des maschinellen Lernmodells aus dem Anwendungscontainer (126, 220), aber Beibehalten der ersten Version im lokalen Speicher (210) auf der Rechenvorrichtung.

## Revendications

1. Procédé mis en oeuvre par ordinateur (300), comprenant :
l'exécution (302), sur un dispositif informatique périphérique, d'une application avec une première version d'un modèle d'apprentissage automatique ;
la réception (304), sur le dispositif informatique périphérique, d'une seconde version du modèle d'apprentissage automatique ;
**caractérisé en ce que** le procédé (300) comprend en outre :
la réception (306), sur le dispositif informatique périphérique, de nouvelles données de configuration pour l'application qui spécifient l'utilisation de la seconde version ; et
en réponse à la détection des nouvelles données de configuration, le fait d'amener (308) l'application, pendant l'exécution, à passer automatiquement à la seconde version du modèle d'apprentissage automatique,
dans lequel des versions de modèle d'apprentissage automatique sont stockées dans une mémoire locale sur le dispositif informatique périphérique,
dans lequel la seconde version du modèle d'apprentissage automatique peut être montée à partir de la mémoire locale (210) sur le dispositif informatique périphérique dans un conteneur d'application (126, 220) dans lequel l'application est en cours d'exécution.

2. Procédé mis en oeuvre par ordinateur (300) selon la revendication 1, dans lequel le dispositif informatique périphérique est un serveur ou un système sur puce (SoC) situé en périphérie de réseau.

3. Procédé mis en oeuvre par ordinateur (300) selon la revendication 1 ou 2, dans lequel la première version et la seconde version sont stockées dans un répertoire de modèles (212) d'un volume de stockage monté sur le dispositif informatique périphérique.

4. Procédé mis en oeuvre par ordinateur (300) selon l'une quelconque des revendications précédentes, comprenant en outre :
la surveillance d'un espace de modèles (206) associé au modèle d'apprentissage automatique ; et
la récupération automatique de la seconde version du modèle d'apprentissage automatique sur le dispositif informatique périphérique en réponse à la détection de la seconde version dans l'espace de modèles (206).

5. Procédé mis en oeuvre par ordinateur (300) selon l'une quelconque des revendications précédentes, comprenant en outre :
la génération d'un nouveau contexte en réponse à la détection des nouvelles données de configuration, dans lequel l'application est amenée à passer automatiquement à l'utilisation de la seconde version en outre en réponse à la détection par l'application que le nouveau contexte est disponible.

6. Procédé mis en oeuvre par ordinateur (300) selon l'une quelconque des revendications précédentes, dans lequel l'application peut passer automatiquement à l'utilisation de la seconde version sans nécessiter un redémarrage de l'application.

7. Procédé mis en oeuvre par ordinateur (300) selon l'une quelconque des revendications précédentes, dans lequel l'application a été déployée sur le dispositif informatique périphérique en tant que partie d'une image de conteneur d'application qui n'incluait pas la première version du modèle d'apprentissage automatique.

8. Procédé mis en oeuvre par ordinateur (300) selon la revendication 7, comprenant en outre :
la suppression de la première version du modèle d'apprentissage automatique à partir du conteneur d'application (126, 220), mais la conservation de la première version dans la mémoire locale (210) sur le dispositif informatique périphérique.

9. Procédé mis en oeuvre par ordinateur (300) selon la revendication 8, comprenant en outre : la réception de données de configuration mises à jour pour l'application qui spécifient l'utilisation de la première version ; et
en réponse à la détection des données de configuration mises à jour, le fait d'amener l'application, pendant l'exécution, à passer automatiquement à la première version du modèle d'apprentissage automatique, la première version étant montée sur le conteneur d'application (126, 220) à partir de la mémoire locale (210) sur le dispositif informatique périphérique.

10. Système (900) dans un dispositif informatique périphérique, le système comprenant :
au moins un processeur (902) ; et
une mémoire (920) incluant des instructions qui, lorsqu'elles sont exécutées par le au moins un processeur (902), amènent le système (900) à :
exécuter (302) une application avec une première version d'un modèle d'apprentissage automatique ;
recevoir (304) une seconde version du modèle d'apprentissage automatique ; dans lequel le système comprend en outre une mémoire locale ;
**caractérisé en ce que** les instructions amènent en outre le système (900) à : stocker des versions de modèle d'apprentissage automatique dans la mémoire locale sur le dispositif informatique périphérique ;
recevoir (306) des nouvelles données de configuration pour l'application qui spécifient l'utilisation de la seconde version ; et
en réponse à la détection des nouvelles données de configuration, amener (308) l'application, pendant l'exécution, à passer automatiquement à la seconde version du modèle d'apprentissage automatique, dans lequel la seconde version du modèle d'apprentissage automatique peut être montée à partir de la mémoire locale (210) sur le dispositif informatique périphérique dans un conteneur d'application (126, 220) dans lequel l'application est en cours d'exécution.

11. Système (900) selon la revendication 10, dans lequel les instructions, lorsqu'elles sont exécutées, amènent en outre le système à :
surveiller un espace de modèles (206) associé au modèle d'apprentissage automatique ; et
récupérer automatiquement la seconde version du modèle d'apprentissage automatique sur le dispositif informatique en réponse à la détection de la seconde version dans l'espace de modèles (206).

12. Système (900) selon la revendication 10 ou 11, dans lequel le système (900) est situé en périphérie de réseau, et comprenant en outre :
une mémoire locale (210) pour stocker la première version et la seconde version dans des sous-répertoires d'un répertoire de modèles, dans lequel l'application est capable de passer automatiquement à la seconde version du modèle d'apprentissage automatique une fois montée dans le conteneur d'application (126, 220).

13. Système (900) selon la revendication 12, dans lequel l'application a été déployée sur le système (900) en tant que partie d'une image de conteneur d'application qui n'incluait pas la première version du modèle d'apprentissage automatique.

14. Système (900) selon l'une quelconque des revendications 10 à 13, dans lequel les instructions, lorsqu'elles sont exécutées, amènent en outre le système (900) à :
générer un nouveau contexte en réponse à la détection des nouvelles données de configuration, dans lequel l'application est amenée à passer automatiquement à l'utilisation de la seconde version en outre en réponse à la détection par l'application que le nouveau contexte est disponible.

15. Système (900) selon l'une quelconque des revendications 10 à 14, dans lequel l'application peut passer automatiquement à l'utilisation de la seconde version sans nécessiter un redémarrage de l'application.

16. Procédé mis en oeuvre par ordinateur (300) selon la revendication 1, comprenant :
l'exécution, dans le conteneur d'application (126, 220) sur un dispositif périphérique de réseau, d'une application utilisant une première version d'un modèle d'apprentissage automatique pour produire des inférences sur un flux de données ;
la détection d'une nouvelle version du modèle d'apprentissage automatique disponible à partir d'une source de modèle ;
la récupération de la nouvelle version du modèle dans une mémoire locale (210) sur le dispositif périphérique de réseau ;
la mise à jour d'informations de contexte pour indiquer la nouvelle version du modèle ;
le montage de la nouvelle version du modèle dans le conteneur d'application (126, 220) ; et
le fait de permettre à l'application de passer automatiquement à l'utilisation de la nouvelle version du modèle d'apprentissage automatique sans perte de données du flux de données.

17. Procédé mis en oeuvre par ordinateur (300) selon la revendication 16, dans lequel la première version et la nouvelle version sont stockées dans des sous-répertoires d'un répertoire de modèles d'un volume de stockage monté sur le dispositif périphérique de réseau.

18. Procédé mis en oeuvre par ordinateur (300) selon la revendication 16 ou 17, dans lequel l'application est amenée à détecter des informations de contexte mises à jour et, en réponse, à passer automatiquement à l'utilisation de la seconde version sans redémarrage ou mise à jour de l'application.

19. Procédé mis en oeuvre par ordinateur (300) selon l'une quelconque des revendications 16 à 18, dans lequel l'application a été déployée sur le dispositif périphérique de réseau en tant que partie d'une image de conteneur d'application qui n'incluait pas la première version du modèle d'apprentissage automatique.

20. Procédé mis en oeuvre par ordinateur (300) selon l'une quelconque des revendications 16 à 19, comprenant en outre :
la suppression de la première version du modèle d'apprentissage automatique à partir du conteneur d'application (126, 220), mais la conservation de la première version dans la mémoire locale (210) sur le dispositif informatique.
